(19) Europäisches Patentamt
European Patent Office
Office européen des brevets

(11) **EP 4 611 424 A1**

(12) **EUROPEAN PATENT APPLICATION**
published in accordance with Art. 153(4) EPC

(43) Date of publication:
**03.09.2025 Bulletin 2025/36**

(21) Application number: **23884603.4**

(22) Date of filing: **17.10.2023**

(51) International Patent Classification (IPC):
**H04W 24/08** (2009.01)

(52) Cooperative Patent Classification (CPC):
**H04W 24/02; H04W 24/08**

(86) International application number:
**PCT/CN2023/125054**

(87) International publication number:
**WO 2024/093671 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.11.2022 CN 202211369072**

(71) Applicant: **Huawei Technologies Co., Ltd.
Shenzhen, Guangdong 518129 (CN)**

(72) Inventors:
• **WANG, Xuesong
Shenzhen, Guangdong 518129 (CN)**
• **XIAO, Xinlong
Shenzhen, Guangdong 518129 (CN)**
• **ZHANG, Li
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS**

(57) This application provides a communication method and apparatus, and relates to the field of communication technologies. In the communication method, even if a terminal device is in a case, that is, the terminal device has no serving cell on a first frequency range and supports a per-frequency range measurement gap configuration, and performs a measurement based on the per-frequency range measurement gap configuration or has no measurement gap configuration on the first fre-quency rang, the terminal device may determine carrier-specific scaling factors CSSFs of N measurement gap-based measurements based on information about the N measurement gap-based measurements, where N measurement gap-based measurement frequencies are located on the first frequency range, and N is a positive integer. In this way, a manner that is applicable to determining a CSSF by the terminal device for the foregoing case is provided.

FIG. 7

**Description**

CROSS-REFERENCE TO RELATED APPLICATIONS

This application claims priority to Chinese Patent Application No. 202211369072.4, filed with the China National Intellectual Property Administration on November 3, 2022 and entitled "COMMUNICATION METHOD AND APPARATUS", which is incorporated herein by reference in its entirety.

TECHNICAL FIELD

Embodiments of this application relate to the field of communication technologies, and in particular, to a communication method and apparatus.

BACKGROUND

A network device may configure measurements of a plurality of frequencies for a terminal device. A quantity of radio frequency channels of the terminal device is limited. In addition, some radio frequency channels of the terminal device may be further used to receive and send data. In this way, the terminal device may not be able to use all the radio frequency channels of the terminal device for measurements. Therefore, when the network device configures the measurements of the plurality of frequencies for the terminal device, the terminal device may not be able to perform the measurements of the plurality of frequencies in parallel. A solution is as follows: The terminal device may perform the measurements of the plurality of frequencies in a time division manner. However, in this solution, the terminal device may not be able to complete the measurements of the plurality of frequencies within a specified delay indicator. To resolve the foregoing problem, a carrier-specific scaling factor (carrier-specific scaling factor, CSSF) is introduced in a protocol. The CSSF may be considered as a relaxation factor, and the CSSF is used to exponentially prolong the delay indicator. The CSSF is used to prolong the delay indicator, so that the terminal device has more time to perform the measurements of the plurality of frequencies. Specifically, the terminal device may calculate a CSSF corresponding to each frequency in the measurements of the plurality of frequencies, determine, based on the CSSF corresponding to each frequency in the measurements of the plurality of frequencies, a delay indicator corresponding to the measurement of each of the plurality of frequencies, and perform the measurement of the frequency by using the delay indicator of the measurement of each frequency as a reference.

Currently, the protocol specifies that a CSSF calculation manner includes a manner of calculating a CSSF of a measurement performed within a measurement gap (measurement gap, MG) (which may be represented as $CSSF_{within\_gap}$) and a manner of calculating a CSSF of a measurement performed outside a measurement gap (which may be represented as $CSSF_{outside\_gap}$). The manner of calculating $CSSF_{within\_gap}$ is applicable to calculating a CSSF of a measurement gap-based (or required) (gap-based) measurement performed by the terminal device, and $CSSF_{within\_gap}$ is related to a measurement gap configured by the network device. The manner of calculating $CSSF_{outside\_gap}$ is applicable to calculating a CSSF of gap-less (gap-less) measurement performed by the terminal device, and $CSSF_{outside\_gap}$ is unrelated to whether a base station configures a measurement gap. However, there may be a case in which the terminal device has no serving cell on a frequency range, the terminal device supports a per-frequency range measurement gap (per-frequency range measurement gap, Per-FR gap) configuration, and the network device configures a measurement gap-based measurement on the frequency range for the terminal device. However, because there is no serving cell on the frequency range, the terminal device performs the measurement gap-based measurement in a measurement gap-less (gap-less) manner as required in the protocol. In this case, if the terminal device calculates the CSSF in a manner of calculating $CSSF_{within\_gap}$, but the terminal device may not be able to determine a measurement gap, or the network device may not configure a measurement gap for the terminal device, the terminal device cannot calculate the CSSF. However, if the terminal device calculates the CSSF in a manner of calculating $CSSF_{outside\_gap}$, and the base station configures a measurement gap for the terminal device, it is difficult for the terminal device to determine whether to ignore the measurement gap to calculate the CSSF. Therefore, neither the manner of calculating $CSSF_{within\_gap}$ nor the manner of calculating $CSSF_{outside\_gap}$ can be used to calculate the CSSF for the foregoing case. How to calculate the CSSF for the foregoing case is a problem that needs to be urgently resolved.

SUMMARY

Embodiments of this application provide a communication method and apparatus, to provide a CSSF calculation manner applicable to a case (that is, a case in which a terminal device has no serving cell on a frequency range, the terminal device supports a per-frequency range measurement gap configuration, and a network device configures a measurement gap-based measurement on a frequency range for the terminal device).

According to a first aspect, an embodiment of this application provides a communication method. The method may be performed by a terminal device, or may be performed by a chip system or another function module. The chip system or the function module can implement a function of the terminal device. For ease of description, the following uses an example in which the terminal device performs the method for description. The terminal device receives information about N measurement gap-based measurements, where N measurement gap-based measurement frequencies are located on a first frequency range, and N is a positive integer. The terminal device determines carrier-specific scaling factors CSSFs of the N measurement gap-based measurements, where the CSSFs of the N measurement gap-based measurements are related to the information about the N measurement gap-based measurements, where the terminal device has no serving cell on the first frequency range, and supports a per-frequency range measurement gap (per-frequency range gap, Per-FR gap) configuration. Optionally, the terminal device performs a measurement based on a per-frequency range measurement gap configuration, or has no measurement gap configuration on the first frequency range. The CSSFs of the N measurement gap-based measurements may include N CSSFs, and one of the N CSSFs is a CSSF of one of the N measurement gap-based measurements. Optionally, the N measurement gap-based measurements may belong to measurement gap-based measurements. However, because the terminal device has no serving cell on the first frequency range, the terminal device may determine to perform the N measurement gap-based measurements in a measurement gap-less manner.

In this embodiment of this application, when the terminal device has no serving cell on the first frequency range and supports the per-frequency range measurement gap configuration, and performs the measurement based on the per-frequency range measurement gap configuration or has no measurement gap configuration on the first frequency range, the terminal device may alternatively determine the CSSFs of the N measurement gap-based measurements. For example, the terminal device determines the CSSFs of the N measurement gap-based measurements based on the information about the N measurement gap-based measurements. In this way, a CSSF calculation manner is provided. In addition, in this embodiment of this application, determining the CSSFs of the N measurement gap-based measurements is irrelevant to whether a network device configures (or provides) a measurement gap configuration for the terminal device. Therefore, the CSSF calculation manner is more applicable.

In a possible implementation, the information about the N measurement gap-based measurements indicates at least one of the following: R time domain locations, where R is an integer greater than or equal to 1; a quantity of measurement frequencies; a first quantity, where the first quantity is a total quantity of the N measurement gap-based measurements and first measurements, and the first measurement is a measurement other than the N measurement gap-based measurements; time domain locations of any two measurement gap-based measurements that are in the N measurement gap-based measurements and that do not overlap, where N is an integer greater than 1; or measurement-related information configured for one measurement gap-based measurement, where N is 1.

In the foregoing implementation, a plurality of possibilities of the information about the N measurement gap-based measurements are provided, and forms of the information about the N measurement gap-based measurements are enriched. For example, the information about the N measurement gap-based measurements indicates at least one of the R time domain locations, the quantity of measurement frequencies, the first quantity, or the any two time domain locations that are in the N measurement gap-based measurements and that do not overlap. For example, the terminal device may obtain a plurality of possible pieces of information about the N measurement gap-based measurements from the network device. In this way, a manner in which the terminal device obtains the plurality of possible pieces of information about the N measurement gap-based measurements is simple, thereby helping reduce difficulty in determining the N measurement gap-based measurements by the terminal device.

In a possible implementation, the information about the N measurement gap-based measurements indicates the R time domain locations; and a CSSF of the one measurement gap-based measurement is a second quantity, the second quantity is a maximum quantity of time domain locations that overlap a time domain location of the one measurement gap-based measurement in the R time domain locations, and the one measurement gap-based measurement is one of the N measurement gap-based measurements.

In the foregoing implementation, the terminal device may determine the CSSFs of the N measurement gap-based measurements based on a case in which time domain locations of the N measurement gap-based measurements overlap, without considering a measurement gap configuration. Therefore, the CSSF calculation manner is more applicable. In addition, when the CSSFs are calculated, a case in which the time domain locations of the N measurement gap-based measurements overlap is considered, which is equivalent to considering possible delays of the N measurement gap-based measurements. Therefore, the determined CSSFs have more reference value, that is, the determined CSSFs are more accurate. In this way, the terminal device can complete the measurements within delay indicators determined based on the CSSFs.

In a possible implementation, the information about the N measurement gap-based measurements indicates the R time domain locations; a CSSF of the one measurement gap-based measurement is a second quantity, the second quantity is a maximum quantity of time domain locations that overlap a time domain location of the one measurement gap-based measurement in the R time domain locations, the one measurement gap-based measurement is one of M measurement gap-based measurements, and the M measurement gap-based measurements belong to the N measurement gap-based measurements, and M is an integer greater than or equal to 1; and CSSFs of P measurement gap-based measurements are a first value, the P measurement gap-based measurements are measurements other than the M measurement gap-based measurements in the N measurement gap-based measurements, and P is an integer greater than or equal to 0. Optionally, the first value is, for example, 1, 2, or 3.

In the foregoing implementation, the terminal device may determine that the CSSFs of the P measurement gap-based measurements are the first value, and the first value may be preconfigured in the terminal device. Therefore, a manner in which the terminal device determines the CSSFs of the P measurement gap-based measurements is simple. In addition, the terminal device determines CSSFs of the M measurement gap-based measurements without using information about the measurement gap-based measurements. Therefore, a manner of determining the CSSFs of the M measurement gap-based measurements is more applicable.

In a possible implementation, the second quantity corresponds first duration. The first duration may be, for example, 160 milliseconds (ms).

In the foregoing implementation, that the second quantity corresponds to first duration may be understood as that the second quantity is the maximum quantity of time domain locations that overlap the time domain location of the one measurement gap-based measurement in the R time domain locations in the first duration, and a manner of determining the first quantity is provided.

In a possible implementation, the CSSFs of the N measurement gap-based measurements are the quantity of measurement frequencies.

In the foregoing implementation, the terminal device may determine the quantity of the N measurement gap-based measurement frequencies as the CSSFs of the N measurement gap-based measurements, and a simple manner of determining the CSSFs is provided. In addition, the CSSFs of the N measurement gap-based measurements each are the quantity of the N measurement gap-based measurement frequencies. Therefore, the CSSFs of the N measurement gap-based measurements each are large. In this way, sufficient measurement time can be reserved for each of the N measurement gap-based measurements performed by the terminal device, so as to ensure that the terminal device can complete the N measurement gap-based measurements within the corresponding delay indicator.

In a possible implementation, the CSSFs of the N measurement gap-based measurements are related to the first quantity.

In the foregoing implementation, not only the N measurement gap-based measurements are considered, but also the first measurement is considered. Therefore, measurements that may be performed by the terminal device are considered more comprehensively. In addition, because a plurality of measurements that may be performed by the terminal device are considered, the CSSFs of the determined N measurement gap-based measurements can be large. In this way, sufficient measurement time can be reserved for each of the N measurement gap-based measurements, so as to ensure that the terminal device can complete the N measurement gap-based measurements within the corresponding delay indicator.

In a possible implementation, the first quantity is $\lceil 3/(4*W) \rceil$ or (2\*W), where $\lceil 3/(4*W) \rceil$ represents rounding up [3/(4\*W)], and W is the first quantity, that is, the total quantity of the N measurement gap-based measurements and first measurements.

Optionally, if the terminal device does not (or does not need to) perform the first measurement, or it may be understood that the quantity of first measurements is 0, the first quantity is $\lceil 3/(4*N) \rceil$ or (2\*N).

In a possible implementation, the first measurement includes at least one of the following: a measurement gap-less synchronization signal SSB intra-frequency measurement on a second frequency range; a measurement gap-less SSB inter-frequency measurement on a second frequency range; a channel state information reference signal CSI-RS-based intra-frequency measurement on a second frequency range; or an intra-frequency received signal strength indication RSSI or channel occupancy CO measurement on a second frequency range.

In the foregoing implementation, a plurality of possible forms of the first measurement are provided. In addition, in the foregoing implementation, some possible measurements (that is, the first measurement) on the second frequency range are further considered. Therefore, measurements that may be performed by the terminal device are more comprehensively considered. In this way, the determined CSSFs of the N measurement gap-based measurements have more reference value, that is, are more accurate.

In a possible implementation, the first measurement includes at least one of the following: a measurement gap-less SSB measurement configured in a secondary cell on a second frequency range; or a measurement gap-less SSB inter-frequency measurement on a second frequency range. The measurement gap-less SSB measurement configured in the secondary cell may be an inter-RAT SSB measurement performed by the terminal device.

In the foregoing implementation, a plurality of possible forms of the first measurement are provided. In addition, in the foregoing implementation, some possible measurements (that is, the first measurement) on the second frequency range are further considered. Therefore, measurements that may be performed by the terminal device are more comprehensively considered. In this way, the determined CSSFs of the N measurement gap-based measurements have more reference value, that is, are more accurate.

In a possible implementation, the information about the N measurement gap-based measurements indicates that the time domain locations of the any two of the N measurement gap-based measurements do not overlap, and the CSSFs of the N measurement gap-based measurements are a second value. Optionally, the second value may be, for example, 1, 2, or 3.

In the foregoing implementation, the time domain locations of the any two of the N measurement gap-based measurements do not overlap. In other words, there is no time conflict between the N measurement gap-based measurements. In this case, the terminal device may determine that the CSSFs of the N measurement gap-based measurements are the second value, and the terminal device does not need to perform complex calculation. This helps reduce a processing amount of the terminal device, and makes a CSSF determining manner simple.

In a possible implementation, the information about the N measurement gap-based measurements indicates the measurement-related information configured for the one measurement gap-based measurement, where N is 1, and the CSSFs of the N measurement gap-based measurements are a third value. Optionally, the third value may be, for example, 1, 2, or 3.

In the foregoing implementation, when the measurement-related information of the one measurement gap-based measurement configuration is configured for the terminal device, the terminal device may directly determine that the CSSF of the measurement gap-based measurement is the third value, and the terminal device does not need to perform complex calculation. This reduces a processing amount of the terminal device, and makes a CSSF determining manner simple.

In a possible implementation, the N measurement gap-based measurements include at least one of the following: a synchronization signal SSB-based inter-frequency measurement; a CSI-RS-based inter-frequency measurement; a universal terrestrial radio access UTRA measurement; an E-UTRA measurement; an inter-frequency RSSI or CO measurement; or a positioning measurement. Optionally, the positioning measurement may be an inter-frequency measurement of a reference signal time difference of a new radio system, an inter-frequency measurement of an evolved universal terrestrial radio access system, or a positioning reference signal measurement.

In the foregoing implementation, a plurality of forms of the N measurement gap-based measurements are provided. In addition, the N measurement gap-based measurements include measurement gap-based measurements that may be performed by the terminal device on the first frequency range. Therefore, CSSFs of the measurement gap-based measurements that may be performed by the terminal device on the first frequency range can be more comprehensively determined.

According to a second aspect, an embodiment of this application provides a communication method. The method may be performed by a network device, or may be performed by a chip system or another function module. The chip system or the function module can implement a function of the network device. For ease of description, the following uses an example in which the network device performs the method for description. The network device determines information about N measurement gap-based measurements, where N measurement gap-based measurement frequencies are located on a first frequency range, and N is a positive integer. The network device sends the information about the N measurement gap-based measurements to a terminal device, where the terminal device has no serving cell on the first frequency range and supports a per-frequency range measurement gap configuration, and the network device provides a per-frequency range measurement gap configuration for the terminal device or does not provide the terminal device with a measurement gap configuration on the first frequency range, where the information about the N measurement gap-based measurements is used to determine CSSFs of the N measurement gap-based measurements. That the network device does not provide the terminal device with a measurement gap configuration on the first frequency range may be understood as that the terminal device does not have a measurement gap configuration on the first frequency range.

In a possible implementation, the information about the N measurement gap-based measurements indicates at least one of the following: R time domain locations, where R is an integer greater than or equal to 1; a quantity of measurement frequencies; a first quantity, where the first quantity is a total quantity of the N measurement gap-based measurements and first measurements, and the first measurement is a measurement other than the N measurement gap-based measurements; time domain locations of any two measurement gap-based measurements that are in the N measurement gap-based measurements and that do not overlap, where N is an integer greater than 1; or measurement-related information of one measurement gap-based measurement, where N is 1.

In a possible implementation, the information about the N measurement gap-based measurements indicates the R time domain locations; and a CSSF of the one measurement gap-based measurement is a second quantity, the second quantity is a maximum quantity of time domain locations that overlap a time domain location of the one measurement gap-based measurement in the R time domain locations, and the one measurement gap-based measurement is one of the N measurement gap-based measurements.

In a possible implementation, the information about the N measurement gap-based measurements indicates the R time domain locations; and

a CSSF of the one measurement gap-based measurement is a second quantity, the second quantity is a maximum quantity of time domain locations that overlap a time domain location of the one measurement gap-based measurement in the R time domain locations, the one measurement gap-based measurement is one of M measurement gap-based measurements, the M measurement gap-based measurements belong to the N measurement gap-based measurements, and M is an integer greater than or equal to 1; and CSSFs of P measurement gap-based measurements are a first value, the P measurement gap-based measurements are measurements other than the M measurement gap-based measurements in the N measurement gap-based measurements, and P is an integer greater than or equal to 0.

In a possible implementation, the second quantity corresponds first duration.

In a possible implementation, the CSSFs of the N measurement gap-based measurements are the quantity of measurement frequencies.

In a possible implementation, the CSSFs of the N measurement gap-based measurements are related to the first quantity.

In a possible implementation, the first quantity is $\lceil 3/(4*W) \rceil$ or (2*W), where W is the total quantity of the N measurement gap-based measurements and first measurements.

Optionally, if the terminal device does not (or does not need to) perform the first measurement, the first quantity is $\lceil 3/(4*N) \rceil$ or (2*N).

In a possible implementation, the first measurement includes at least one of the following: a measurement gap-less SSB intra-frequency measurement on a second frequency range; a measurement gap-less SSB inter-frequency measurement on a second frequency range;

a CSI-RS-based intra-frequency measurement on a second frequency range; or an intra-frequency RSSI or CO measurement on a second frequency range.

In a possible implementation, the first measurement includes at least one of the following: a measurement gap-less SSB measurement configured in a secondary cell on a second frequency range; or a measurement gap-less SSB inter-frequency measurement on a second frequency range.

In a possible implementation, the information about the N measurement gap-based measurements indicates that the time domain locations of the any two of the N measurement gap-based measurements do not overlap, and the CSSFs of the N measurement gap-based measurements are a second value.

In a possible implementation, the information about the N measurement gap-based measurements indicates the measurement-related information of the one measurement gap-based measurement, where N is 1, and the CSSFs of the N measurement gap-based measurements are a third value.

For beneficial effects of the second aspect and the possible implementations, refer to the descriptions of the first aspect. Details are not described herein again.

According to a third aspect, an embodiment of this application provides a communication method. The communication method may be performed by a communication system, and the communication system includes a terminal device and a network device. The terminal device in the communication system may perform any method performed by the terminal device in the first aspect, and the network device included in the communication system may perform any method performed by the network device in the second aspect.

For example, the network device sends information about N measurement gap-based measurements to the terminal device, where the terminal device has no serving cell on a first frequency range and supports a per-frequency range measurement gap configuration, and the network device provides the terminal device with a per-frequency range measurement gap configuration or does not provide the terminal device with a measurement gap configuration on the first frequency range, where N measurement gap-based measurement frequencies are located on the first frequency range, and N is a positive integer. The terminal device determines CSSFs of the N measurement gap-based measurements, where the CSSFs of the N measurement gap-based measurements are related to the information about the N measurement gap-based measurements.

For beneficial effects of the third aspect, refer to the descriptions of the first aspect. Details are not described herein again.

According to a fourth aspect, an embodiment of this application provides a communication method. The method may be performed by a terminal device, or may be performed by a chip system or another function module. The chip system or the function module can implement a function of the terminal device. For ease of description, the following uses an example in which the terminal device performs the method for description. The terminal device receives information about N measurement gap-based measurements, where the information about the N measurement gap-based measurements indicates R time domain locations, and R is a positive integer. The terminal device determines that a CSSF of one of the N measurement gap-based measurements is a second quantity, where the second quantity is a maximum quantity of time domain locations that overlap a time domain location of the one measurement gap-based measurement in the R time domain locations, the R time domain locations are time domain locations of the N measurement gap-based measurements, and the N measurement gap-based measurement frequencies are located on a first frequency range.

In this embodiment of this application, the terminal device may determine the CSSF of the one measurement gap-based measurement based on a case in which time domain locations of the N measurement gap-based measurements overlap, without considering a measurement gap configuration. Therefore, a CSSF calculation manner is more applicable. In addition, when the CSSF is calculated, the case in which the time domain locations of the N measurement gap-based measurements overlap is considered, which is equivalent to considering possible delays of the N measurement gap-based measurements. Therefore, the determined CSSF has more reference value, that is, the determined CSSF is more accurate. In this way, the terminal device can complete the measurement within a delay indicator determined based on the CSSF.

In a possible implementation, the terminal device has no serving cell on the first frequency range, and supports a per-frequency range measurement gap configuration. Optionally, the terminal device performs a measurement based on a per-frequency range measurement gap configuration, or has no measurement gap configuration on the first frequency range.

In a possible implementation, the one measurement gap-based measurement is one of M measurement gap-based measurements, and CSSFs of P measurement gap-based measurement are a first value, where the M measurement gap-based measurements belong to the N measurement gap-based measurements, the P measurement gap-based measurements are measurements other than the M measurement gap-based measurements in the N measurement gap-based measurements, M is an integer greater than or equal to 1, and P is an integer greater than or equal to 0.

In a possible implementation, the second quantity corresponds first duration.

For beneficial effects of the possible implementations of the fourth aspect, refer to the descriptions of the first aspect. Details are not described herein again.

According to a fifth aspect, an embodiment of this application provides a communication method. The method may be performed by a network device, or may be performed by a chip system or another function module. The chip system or the function module can implement a function of the network device. For ease of description, the following uses an example in which the network device performs the method for description. The network device determines information about N measurement gap-based measurements, where the information about the N measurement gap-based measurements indicates R time domain locations, and R is a positive integer. The network device sends the information about the N measurement gap-based measurements. A CSSF of one of the N measurement gap-based measurements is a second quantity, the second quantity is a maximum quantity of time domain locations that overlap a time domain location of the one measurement gap-based measurement in the R time domain locations, the R time domain locations are time domain locations of the N measurement gap-based measurements, and N measurement gap-based measurement frequencies are located on a first frequency range.

In a possible implementation, a terminal device has no serving cell on the first frequency range, and supports a per-frequency range measurement gap configuration. Optionally, the network device provides the terminal device with a per-frequency range measurement gap configuration or does not provide the terminal device with a measurement gap configuration on the first frequency range.

In a possible implementation, the one measurement gap-based measurement is one of M measurement gap-based measurements, and CSSFs of P measurement gap-based measurement are a first value, where the M measurement gap-based measurements belong to the N measurement gap-based measurements, the P measurement gap-based measurements are measurements other than the M measurement gap-based measurements in the N measurement gap-based measurements, M is an integer greater than or equal to 1, and P is an integer greater than or equal to 0.

In a possible implementation, the second quantity corresponds first duration.

For beneficial effects of the fifth aspect and the possible implementations, refer to the descriptions of the fourth aspect. Details are not described herein again.

According to a sixth aspect, an embodiment of this application provides a communication method. The method may be performed by a terminal device, or may be performed by a chip system or another function module. The chip system or the function module can implement a function of the terminal device. For ease of description, the following uses an example in which the terminal device performs the method for description. The terminal device receives information about N measurement gap-based measurements, where the N measurement gap-based measurements indicate a quantity of measurement frequencies. The terminal device determines that CSSFs of the N measurement gap-based measurements are the quantity of measurement frequencies, where the measurement frequencies include N measurement gap-based measurement frequencies, and the N measurement gap-based measurement frequencies are located on a first frequency range.

In this implementation of this application, the terminal device may determine the quantity of the N measurement gap-based measurement frequencies as the CSSFs of the N measurement gap-based measurements, and a simple manner of determining the CSSFs is provided. In addition, the CSSFs of the N measurement gap-based measurements each are the quantity of the N measurement gap-based measurement frequencies. Therefore, the CSSFs of the N measurement gap-based measurements each are large. In this way, sufficient measurement time can be reserved for each of the N measurement gap-based measurements performed by the terminal device, so as to ensure that the terminal device can complete the N measurement gap-based measurements within the corresponding delay indicator. In addition, determining the CSSFs of the N measurement gap-based measurements is unrelated to a measurement gap configuration, thereby improving applicability of determining the CSSFs.

In a possible implementation, the terminal device has no serving cell on the first frequency range, and supports a per-frequency range measurement gap configuration. Optionally, the terminal device performs a measurement based on a per-frequency range measurement gap configuration, or has no measurement gap configuration on the first frequency range.

For beneficial effects of the possible implementations of the sixth aspect, refer to the descriptions of the first aspect. Details are not described herein again.

According to a seventh aspect, an embodiment of this application provides a communication method. The method may be performed by a network device, or may be performed by a chip system or another function module. The chip system or the function module can implement a function of the network device. For ease of description, the following uses an example in which the network device performs the method for description. The network device determines information about N measurement gap-based measurements, where the information about the N measurement gap-based measurements indicates a quantity of measurement frequencies, and R is a positive integer. The network device sends the information about the N measurement gap-based measurements. CSSFs of the N measurement gap-based measurements are the quantity of measurement frequencies. N measurement gap-based measurement frequencies are located on a first frequency range.

In a possible implementation, a terminal device has no serving cell on the first frequency range, and supports a per-frequency range measurement gap configuration. Optionally, the network device provides the terminal device with a per-frequency range measurement gap configuration or does not provide the terminal device with a measurement gap configuration on the first frequency range.

For beneficial effects of the seventh aspect and the possible implementations, refer to the descriptions of the sixth aspect. Details are not described herein again.

According to an eighth aspect, an embodiment of this application provides a communication method. The method may be performed by a terminal device, or may be performed by a chip system or another function module. The chip system or the function module can implement a function of the terminal device. For ease of description, the following uses an example in which the terminal device performs the method for description. The terminal device receives information about N measurement gap-based measurements, where the information about the N measurement gap-based measurements indicates a first quantity, the first quantity is a total quantity of the N measurement gap-based measurements and first measurements, and the first measurement is a measurement other than the N measurement gap-based measurements. The terminal device determines that CSSFs of the N measurement gap-based measurements are related to the first quantity, where N measurement gap-based measurement frequencies are located on a first frequency range.

In this embodiment of this application, not only the N measurement gap-based measurements are considered, but also the first measurement is considered. Therefore, measurements that may be performed by the terminal device are considered more comprehensively. In addition, because a plurality of measurements that may be performed by the terminal device are considered, the CSSFs of the determined N measurement gap-based measurements can be large. In this way, sufficient measurement time can be reserved for each of the N measurement gap-based measurements, so as to ensure that the terminal device can complete the N measurement gap-based measurements within the corresponding delay indicator. In addition, determining the CSSFs of the N measurement gap-based measurements is unrelated to a measurement gap configuration, thereby improving applicability of determining the CSSFs.

In a possible implementation, a terminal device has no serving cell on the first frequency range, and supports a per-frequency range measurement gap configuration. Optionally, the terminal device performs a measurement based on a per-frequency range measurement gap configuration, or has no measurement gap configuration on the first frequency range.

In a possible implementation, the CSSFs of the N measurement gap-based measurements are related to $\lceil 3/(4*W) \rceil$ or (2*W), where W is the first quantity. Optionally, if the terminal device does not (or does not need to) perform the first measurement, the first quantity is $\lceil 3/(4*N) \rceil$ or (2*N).

For beneficial effects of the possible implementations of the eighth aspect, refer to the descriptions of the first aspect. Details are not described herein again.

According to a ninth aspect, an embodiment of this application provides a communication method. The method may be performed by a network device, or may be performed by a chip system or another function module. The chip system or the function module can implement a function of the network device. For ease of description, the following uses an example in which the network device performs the method for description. The network device determines information about N measurement gap-based measurements, where the information about the N measurement gap-based measurements indicates a first quantity, the first quantity is a total quantity of the N measurement gap-based measurements and first measurements, and the first measurement is a measurement other than the N measurement gap-based measurements. The network device sends the information about the N measurement gap-based measurements. CSSFs of the N measurement gap-based measurements are related to the first quantity, and N measurement gap-based measurement frequencies are located on a first frequency range.

In a possible implementation, a terminal device has no serving cell on the first frequency range, and supports a per-frequency range measurement gap configuration. Optionally, the network device provides the terminal device with a per-frequency range measurement gap configuration or does not provide the terminal device with a measurement gap configuration on the first frequency range.

In a possible implementation, the CSSFs of the N measurement gap-based measurements are related to $\lceil 3/(4*W) \rceil$ or (2*W), where W is the first quantity. Optionally, if the terminal device does not (or does not need to) perform the first measurement, the first quantity is $\lceil 3/(4*N) \rceil$ or (2*N).

For beneficial effects of the ninth aspect and the possible implementations, refer to the descriptions of the eighth aspect. Details are not described herein again.

According to a tenth aspect, an embodiment of this application provides a communication method. The method may be performed by a terminal device, or may be performed by a chip system or another function module. The chip system or the function module can implement a function of the terminal device. For ease of description, the following uses an example in which the terminal device performs the method for description. The terminal device receives information about N measurement gap-based measurements, where the information about the N measurement gap-based measurements indicates that time domain locations of any two of the N measurement gap-based measurements do not overlap. The terminal device determines that CSSFs of the N measurement gap-based measurements are a second value, where N measurement gap-based measurement frequencies are located on a first frequency range.

In this embodiment of this application, the time domain locations of the any two of the N measurement gap-based measurements do not overlap. In other words, there is no time conflict between the N measurement gap-based measurements. In this case, the terminal device may determine that the CSSFs of the N measurement gap-based measurements are the second value, and the terminal device does not need to perform complex calculation. This helps reduce a processing amount of the terminal device, and makes a CSSF determining manner simple. In addition, determining the CSSFs of the N measurement gap-based measurements is unrelated to a measurement gap configuration, thereby improving applicability of determining the CSSFs.

In a possible implementation, a terminal device has no serving cell on the first frequency range, and supports a per-frequency range measurement gap configuration. Optionally, the terminal device performs a measurement based on a per-frequency range measurement gap configuration, or has no measurement gap configuration on the first frequency range.

For beneficial effects of the possible implementations of the tenth aspect, refer to the descriptions of the first aspect. Details are not described herein again.

According to an eleventh aspect, an embodiment of this application provides a communication method. The method may be performed by a network device, or may be performed by a chip system or another function module. The chip system or the function module can implement a function of the network device. For ease of description, the following uses an example in which the network device performs the method for description. The network device determines information about N measurement gap-based measurements, where the information about the N measurement gap-based measurements indicates that time domain locations of any two of the N measurement gap-based measurements do not overlap. The network device sends the information about the N measurement gap-based measurements. CSSFs of the N measurement gap-based measurements are a second value, where N measurement gap-based measurement frequencies are located on a first frequency range.

In a possible implementation, a terminal device has no serving cell on the first frequency range, and supports a per-frequency range measurement gap configuration. Optionally, the network device provides the terminal device with a per-frequency range measurement gap configuration or does not provide the terminal device with a measurement gap configuration on the first frequency range.

For beneficial effects of the eleventh aspect and the possible implementations, refer to the descriptions of the tenth aspect. Details are not described herein again.

According to a twelfth aspect, an embodiment of this application provides a communication method. The method may be performed by a terminal device, or may be performed by a chip system or another function module. The chip system or the function module can implement a function of the terminal device. For ease of description, the following uses an example in which the terminal device performs the method for description. The method includes: The terminal device receives information about one measurement gap-based measurement, where the information about the one measurement gap-based measurement indicates measurement-related information of one measurement gap-based measurement configuration. The terminal device determines that a CSSF of the one measurement gap-based measurement is a third value, where one measurement gap-based measurement frequency is located on a first frequency range.

In this embodiment of this application, when the measurement-related information of the one measurement gap-based measurement configuration is configured for the terminal device, the terminal device may directly determine that the CSSF of the measurement gap-based measurement is the third value, and the terminal device does not need to perform complex calculation. This reduces a processing amount of the terminal device, and makes a CSSF determining manner simple. In addition, determining the CSSFs of the N measurement gap-based measurements is unrelated to a measurement gap configuration, thereby improving applicability of determining the CSSFs.

In a possible implementation, a terminal device has no serving cell on the first frequency range, and supports a per-frequency range measurement gap configuration. Optionally, the terminal device performs a measurement based on a per-frequency range measurement gap configuration, or has no measurement gap configuration on the first frequency range.

For beneficial effects of the possible implementations of the twelfth aspect, refer to the descriptions of the first aspect. Details are not described herein again.

According to a thirteenth aspect, an embodiment of this application provides a communication method. The method may be performed by a network device, or may be performed by a chip system or another function module. The chip system or the function module can implement a function of the network device. For ease of description, the following uses an example in which the network device performs the method for description. The network device determines information about one measurement gap-based measurement, where the information about the one measurement gap-based measurement is measurement-related information of one measurement gap-based measurement configuration. The network device sends the information about the one measurement gap-based measurement. A CSSF of the one measurement gap-based measurement is a third value, and one measurement gap-based measurement frequency is located on a first frequency range.

In a possible implementation, a terminal device has no serving cell on the first frequency range, and supports a per-frequency range measurement gap configuration. Optionally, the network device provides the terminal device with a per-frequency range measurement gap configuration or does not provide the terminal device with a measurement gap configuration on the first frequency range.

For beneficial effects of the thirteenth aspect, refer to the descriptions of the twelfth aspect. Details are not described herein again.

According to a fourteenth aspect, an embodiment of this application provides a communication apparatus. The communication apparatus may be the terminal device in the first aspect, or may be a chip system configured in the terminal device in the first aspect. The communication apparatus includes a corresponding means (means) or module configured to perform the first aspect or any optional implementation. For example, the communication apparatus includes a processing module (which is sometimes also referred to as a processing unit) and a transceiver module (which is sometimes also referred to as a transceiver unit).

For example, the transceiver module is configured to receive information about N measurement gap-based measurements, where N measurement gap-based measurement frequencies are located on a first frequency range, and N is a positive integer; and the processing module is configured to determine carrier-specific scaling factors CSSFs of the N measurement gap-based measurements, where the CSSFs of the N measurement gap-based measurements are related to the information about the N measurement gap-based measurements.

In an optional implementation, the communication apparatus includes a storage module (which is sometimes also referred to as a storage unit). The processing module can be coupled to the storage module, and execute a program or instructions in the storage module, to enable the communication apparatus to perform any function of the terminal device in the first aspect.

According to a fifteenth aspect, an embodiment of this application provides a communication apparatus. The communication apparatus may be the network device in the second aspect, or may be a chip system configured in the network device in the second aspect. The communication apparatus includes a corresponding means (means) or module configured to perform the second aspect or any optional implementation. For example, the communication apparatus includes a processing module (which is sometimes also referred to as a processing unit) and a transceiver module (which is sometimes also referred to as a transceiver unit).

For example, the processing module is configured to determine information about N measurement gap-based measurements, where N measurement gap-based measurement frequencies are located on a first frequency range, and N is a positive integer. The transceiver module is configured to send the information about the N measurement gap-based measurements to a terminal device, where the terminal device has no serving cell on the first frequency range, and supports a per-frequency range measurement gap configuration, and the network device provides a per-frequency range measurement gap configuration for the terminal device or does not provide the terminal device with a measurement gap configuration on the first frequency range, where the information about the N measurement gap-based measurements is used to determine CSSFs of the N measurement gap-based measurements.

In an optional implementation, the communication apparatus includes a storage module (which is sometimes also referred to as a storage unit). The processing module can be coupled to the storage module, and execute a program or instructions in the storage module, to enable the communication apparatus to perform any function of the terminal device in the first aspect.

According to a sixteenth aspect, an embodiment of this application provides a communication apparatus. The communication apparatus may be any terminal device in the fourth aspect to the eighth aspect, or may be a chip system configured in any terminal device in the fourth aspect, the sixth aspect, the eighth aspect, the tenth aspect, and the twelfth aspect. The communication apparatus includes a corresponding means (means) or module configured to perform any method in the fourth aspect, the sixth aspect, the eighth aspect, the tenth aspect, and the twelfth aspect. For example, the communication apparatus includes a processing module (which is sometimes also referred to as a processing unit) and a transceiver module (which is sometimes also referred to as a transceiver unit).

In a possible embodiment, the communication apparatus is configured to implement a function of the terminal device in the fourth aspect.

For example, the transceiver module is configured to receive information about N measurement gap-based measurements, where the information about the N measurement gap-based measurements indicates R time domain locations, and R is a positive integer. The processing module is configured to determine that a CSSF of one of the N measurement gap-based measurements is related to a second quantity, where the second quantity is a maximum quantity of time domain locations that overlap a time domain location of the one measurement gap-based measurement in the R time domain locations, the R time domain locations are time domain locations of the N measurement gap-based measurements, and N measurement gap-based measurement frequencies are located on a first frequency range.

In a possible embodiment, the communication apparatus is configured to implement a function of the terminal device in the sixth aspect.

For example, the transceiver module is configured to receive information about N measurement gap-based measurements, where the N measurement gap-based measurements indicate a quantity of measurement frequencies. The processing module is configured to determine that CSSFs of the N measurement gap-based measurements are related to the quantity of measurement frequencies, where the measurement frequencies include N measurement gap-based measurement frequencies, and the N measurement gap-based measurement frequencies are located on a first frequency range.

In a possible embodiment, the communication apparatus is configured to implement a function of the terminal device in the eighth aspect.

The transceiver module is configured to receive information about N measurement gap-based measurements, where the information about the N measurement gap-based measurements indicates a first quantity, the first quantity is a total quantity of the N measurement gap-based measurements and first measurements, and the first measurement is a measurement other than the N measurement gap-based measurements. The processing module is configured to determine that CSSFs of the N measurement gap-based measurements are related to the first quantity, where N measurement gap-based measurement frequencies are located on a first frequency range.

In a possible embodiment, the communication apparatus is configured to implement a function of the terminal device in the tenth aspect.

The transceiver module is configured to receive information about N measurement gap-based measurements, where the information about the N measurement gap-based measurements indicates that time domain locations of any two of the N measurement gap-based measurements do not overlap. The processing module is configured to determine that CSSFs of the N measurement gap-based measurements are a second value, where N measurement gap-based measurement frequencies are located on a first frequency range.

In a possible embodiment, the communication apparatus is configured to implement a function of the terminal device in the twelfth aspect.

The transceiver module is configured to receive information about one measurement gap-based measurement, where the information about the one measurement gap-based measurement is measurement-related information of the one measurement gap-based measurement configuration. The processing module is configured to determine that a CSSF of the one measurement gap-based measurement is a third value, and one measurement gap-based measurement frequency is located on a first frequency range.

According to a seventeenth aspect, an embodiment of this application provides a communication apparatus. The communication apparatus may be any network device in the fifth aspect, the seventh aspect, the ninth aspect, the eleventh aspect, and the thirteenth aspect, or may be a chip system configured in any network device in the fifth aspect, the seventh aspect, the ninth aspect, the eleventh aspect, and the thirteenth aspect. The communication apparatus includes a corresponding means (means) or module configured to perform any method in the fifth aspect, the seventh aspect, the ninth aspect, the eleventh aspect, and the thirteenth aspect or any optional implementation. For example, the communication apparatus includes a processing module (which is sometimes also referred to as a processing unit) and a transceiver module (which is sometimes also referred to as a transceiver unit).

In a possible embodiment, the communication apparatus is configured to implement a function of the network device in the fifth aspect.

For example, the transceiver module is configured to send information about N measurement gap-based measurements under control of the processing module, where the information about the N measurement gap-based measurements indicates R time domain locations, and R is a positive integer. The transceiver module receives measurement results of the N measurement gap-based measurements under control of the processing module. A CSSF of one of the N measurement gap-based measurements is related to a second quantity, the second quantity is a maximum quantity of time domain locations that overlap a time domain location of the one measurement gap-based measurement in the R time domain locations, the R time domain locations are time domain locations of the N measurement gap-based measurements, and N measurement gap-based measurement frequencies are located on a first frequency range.

In a possible embodiment, the communication apparatus is configured to implement a function of the network device in the seventh aspect.

For example, the transceiver module is configured to send information about N measurement gap-based measurements under control of the processing module, where the information about the N measurement gap-based measurements indicates a quantity of measurement frequencies, and R is a positive integer. The transceiver module is configured to receive measurement results of the N measurement gap-based measurements under control of the processing module. CSSFs of the N measurement gap-based measurements are related to the quantity of measurement frequencies, and N measurement gap-based measurement frequencies are located on a first frequency range.

In a possible embodiment, the communication apparatus is configured to implement a function of the network device in the ninth aspect.

For example, the transceiver module is configured to send information about N measurement gap-based measurements under control of the processing module, where the information about the N measurement gap-based measurements indicates a first quantity, the first quantity is a total quantity of the N measurement gap-based measurements and first measurements, and the first measurement is a measurement other than the N measurement gap-based measurements. The transceiver module is configured to receive measurement results of the N measurement gap-based measurements under control of the processing module. CSSFs of the N measurement gap-based measurements are related to the first quantity, and N measurement gap-based measurement frequencies are located on a first frequency range.

In a possible embodiment, the communication apparatus is configured to implement a function of the terminal device in the eleventh aspect.

For example, the transceiver module is configured to send information about N measurement gap-based measurements under control of the processing module, where the information about the N measurement gap-based measurements indicates that time domain locations of any two of the N measurement gap-based measurements do not overlap. The transceiver module is configured to receive measurement results of the N measurement gap-based measurements under control of the processing module. CSSFs of the N measurement gap-based measurements are a second value, and N measurement gap-based measurement frequencies are located on a first frequency range.

In a possible embodiment, the communication apparatus is configured to implement a function of the network device in the thirteenth aspect.

For example, the transceiver module is configured to send information about one measurement gap-based measurement under control of the processing module, where the information about the one measurement gap-based measurement is measurement-related information of the one measurement gap-based measurement. The transceiver module is configured to receive a measurement result of the one measurement gap-based measurement under control of the processing module. A CSSF of the one measurement gap-based measurement is a third value, and one measurement gap-based measurement frequency is located on a first frequency range.

According to an eighteenth aspect, an embodiment of this application provides a communication apparatus, including a processor and a communication interface. The communication interface is configured to: receive a signal from a communication apparatus other than the communication apparatus and transmit the signal to the processor, or send a signal from the processor to a communication apparatus other than the communication apparatus. The processor is configured to implement the method according to any one of the first aspect, the second aspect, and the fourth aspect to the thirteenth aspect by using a logic circuit or by executing code instructions.

Optionally, the communication apparatus further includes other components, for example, an antenna, an input/output module, and an interface. The components may be hardware, software, or a combination of software and hardware.

According to a nineteenth aspect, an embodiment of this application provides a chip system. The chip system includes a processor and an interface. The processor is configured to invoke instructions from the interface and run the instructions, and when the processor executes the instructions, the method according to any one of the first aspect to the thirteenth aspect is implemented.

According to a twentieth aspect, an embodiment of this application provides a computer-readable storage medium. The computer-readable storage medium is configured to store a computer program or instructions, and when the computer program or the instructions are run, the method according to any one of the first aspect to the thirteenth aspect is implemented.

According to a twenty-first aspect, an embodiment of this application provides a computer program product including instructions. When the computer program product runs on a computer, the method according to any one of the first aspect to the thirteenth aspect is implemented.

For beneficial effects of the fourteenth aspect to the twenty-first aspect, refer to the beneficial effects described in the first aspect to the thirteenth aspect. Details are not described herein again.

BRIEF DESCRIPTION OF DRAWINGS

FIG. 1 to FIG. 3 are diagrams of three searcher division manners;
FIG. 4 is a diagram of a measurement gap and time-frequency locations of a plurality of measurements;
FIG. 5 and FIG. 6 are diagrams of two scenarios to which embodiments of this application are applicable;
FIG. 7 is a schematic flowchart of a communication method according to an embodiment of this application;
FIG. 8 is a diagram of time-frequency locations of N measurement gap-based measurements according to an embodiment of this application;
FIG. 9 is a diagram of time-frequency locations of a plurality of measurements according to an embodiment of this application;
FIG. 10 to FIG. 14 are schematic flowcharts of five communication methods according to embodiments of this application; and
FIG. 15 to FIG. 17 are diagrams of structures of three communication apparatuses according to embodiments of this application.

DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

1. A terminal device is a device having a wireless transceiver function, and may be a fixed device, a mobile device, a handheld device, a wearable device, a vehicle-mounted device, or a wireless apparatus (for example, a communication module or a chip system) disposed in the foregoing device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.
In embodiments of this application, an apparatus configured to implement a function of the terminal device may be a terminal device, or may be an apparatus, for example, a chip system, that can support a terminal device to implement the function. The apparatus may be installed in the terminal device. In the technical solutions provided in embodiments of this application, the technical solutions provided in embodiments of this application are described by using an example in which the apparatus configured to implement the function of the terminal device is the terminal device.
2. A network device includes, for example, an access network device (or referred to as an access network element) and/or a core network device (or referred to as a core network element).

The access network device is a device with a wireless transceiver function, and is configured to communicate with the terminal device. The access network device includes but is not limited to a base station (BTS, NodeB, eNodeB/eNB, or gNodeB/gNB) in the foregoing communication system, a transmission reception point (transmission reception point, TRP), a subsequent evolved base station in 3GPP, an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the network device may be a radio controller, a central unit (central unit, CU) that may also be referred to as an aggregation unit, and/or a distributed unit (distributed unit, DU) in a cloud radio access network (cloud radio access network, C(R)AN) scenario. Alternatively, the network device may be a server, a wearable device, a vehicle-mounted device, or the like. For example, a network device in the vehicle-to-everything (vehicle-to-everything, V2X) technology may be a road side unit (road side unit, RSU). The following uses an example in which the access network device is a base station for description. A plurality of network devices in the communication system may be base stations of a same type, or may be base stations of different types. The base station may communicate with the terminal device, or may communicate with the terminal device via a relay station. The terminal device may communicate with the plurality of base stations in different access technologies.

The core network device is configured to implement at least one of functions such as mobility management, data processing, session management, and policy and charging. Names of devices that implement core network functions in systems of different access technologies may be different. This is not limited in embodiments this application. A 5G system is used as an example. The core network element includes an access and mobility management function (access and mobility management function, AMF), a session management function (session management function, SMF), a PCF, a user plane function (user plane function, UPF), or the like.

In embodiments of this application, an apparatus configured to implement a function of the network device may be a network device, or may be an apparatus, for example, a chip system, that can support the network device to implement the function. The apparatus may be installed in the network device. In the technical solutions provided in embodiments of this application, the technical solutions provided in embodiments of this application are described by using an example in which the apparatus configured to implement the function of the network device is the network device.

3. An intra-frequency measurement means that a measurement frequency on which the terminal device performs a measurement is the same as a measurement frequency of a serving cell of the terminal device, and a subcarrier spacing (subcarrier spacing, SCS) of a measurement resource on which the terminal device performs a measurement is also the same as an SCS of a measurement resource of the serving cell of the terminal device. The measurement frequency may also be referred to as a frequency for short.

4. An inter-frequency measurement means that a measurement frequency on which the terminal device performs a measurement is different from a measurement frequency of a serving cell of the terminal device, and/or a subcarrier spacing (subcarrier spacing, SCS) of a measurement resource on which the terminal device performs a measurement is different from an SCS of a measurement resource of the serving cell of the terminal device.

5. An inter-RAT measurement means that an access technology type of a measurement frequency on which the terminal device performs a measurement is different from an access technology type of a serving cell of the terminal device.

6. A measurement gap may also be referred to as a gap (gap) for short, and is used to specify time at which the terminal device performs an inter-frequency measurement. When the terminal device performs an inter-frequency measurement, communication between the terminal device and a serving cell may be interrupted. Therefore, the network device may configure the measurement gap for the terminal device. In other words, the measurement gap may be understood as being used to perform an inter-frequency measurement of the terminal device and data receiving and sending in the serving cell at different time. The measurement gap may include at least one measurement gap occasion (gap occasion, GO). The measurement gap occasion may also be referred to as a measurement opportunity for short, and the measurement opportunity may also be referred to as a measurement occasion. One of the at least one measurement opportunity may indicate one time period. For example, one measurement opportunity includes a measurement opportunity 1 and a measurement opportunity 2, where the measurement opportunity 1 may indicate 0 ms (millisecond) to 40 ms, and the measurement opportunity 2 may indicate 80 ms to 120 ms.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

The network device may configure a measurement for the terminal device, and the terminal device performs the measurement, and reports a measurement result to the network device. In this way, the network device determines, based on the measurement result, a service performed by the terminal device. Measurements may be classified into two types of measurement based on whether the terminal device needs to perform a measurement gap-based measurement. The two types of measurement include a measurement gap-less (gap-less) measurement (or may be referred to as a measurement that does not need (or is not required) to be supported by a measurement gap) and a measurement gap-based (gap-based) measurement (or may be referred to as a measurement that needs to be supported by a measurement gap). The following describes the two types of measurement.

1. Measurement gap-less measurement.

The terminal device has a capability of concurrently performing measurements on a plurality of frequencies. For example, the terminal device has a plurality of radio frequency channels to separately perform measurements on the plurality of frequencies. Alternatively, the terminal device may separately perform a plurality of measurements. In this case, the terminal device can perform measurements on the plurality of frequencies without using a measurement gap configured by the network device. In other words, the terminal device may perform measurement gap-less measurements.

When measurement is not based on the measurement gap, the terminal device may report a capability required for a gap (needForGap) to the network device. The capability required for a gap may, for example, indicate a plurality of frequencies on which the terminal device can support concurrent measurements.

For example, the measurement gap-less measurement includes at least one of the following measurements A1 to A4.

A1. Synchronization signal-based intra-frequency measurement that meets a first condition on a new radio (new radio, NR) serving frequency. The synchronization signal-based intra-frequency measurement may also be referred to as a synchronization signal intra-frequency measurement for short. A synchronization signal is, for example, a synchronization signal and physical downlink broadcast channel block (synchronization signal and physical downlink broadcast channel block, SSB).

For example, the first condition may include: a measurement window for the synchronization signal-based intra-frequency measurement does not completely overlap a measurement gap configured by the network device, and a measurement frequency for the synchronization signal-based intra-frequency measurement is included in a bandwidth part (bandwidth part, BWP) activated by the terminal device. The measurement window may be understood as a time domain location for performing a measurement. The measurement window for a synchronization signal-based intra-frequency measurement is, for example, a synchronization signal block measurement timing configuration (synchronization signal block measurement timing configuration, SMTC) window.

A2. Channel state information reference signal (channel state information reference signal, CSI-RS)-based intra-frequency measurement that meets a second condition on an NR serving frequency. The CSI-RS-based intra-frequency measurement may also be referred to as a CSI-RS intra-frequency measurement for short.

For example, the second condition may include: a measurement window for the CSI-RS-based intra-frequency measurement does not completely overlap a measurement gap.

A3. Synchronization signal-based inter-frequency measurement that meets a third condition on an NR non-serving frequency. The synchronization signal-based inter-frequency measurement may also be referred to as a synchronization signal inter-frequency measurement for short.

The third condition may include: the terminal device supports the measurement shown in A3 in terms of capability, the network device configures a measurement gap-less identifier for the terminal device, a measurement window for the synchronization signal-based inter-frequency measurement does not completely overlap a measurement gap, and a measurement frequency for the synchronization signal-based inter-frequency measurement is included in an activated BWP of the terminal device.

A4. Received signal strength indication (received signal strength indication, RSSI)/channel occupancy (channel occupancy, CO) measurement that meets a fourth condition on an unlicensed frequency range.

For example, the fourth condition may include: a measurement window corresponding to the RSSI/CO measurement does not overlap a measurement gap, all measurement resources corresponding to the RSSI/CO measurement are located in a carrier bandwidth, and all measurement frequencies corresponding to the RSSI/CO measurement are included in a BWP activated by the terminal device. The measurement window for the RSSI/CO measurement is, for example, a measurement timing configuration (RSSI measurement timing configuration, RMTC) window.

2. Measurement gap-based measurement.

For example, the measurement gap-based measurement may include at least one of A5 to A13.

A5. Synchronization signal-based intra-frequency measurement on an NR frequency other than A1.

A6. Synchronization signal-based inter-frequency measurement on an NR frequency other than A3.

A7. CSI-RS-based inter-frequency measurement on an NR frequency.

A8. EUTRA measurement on an evolved universal terrestrial radio access (evolution universal terrestrial radio access, E-UTRA) non-serving frequency. E-UTRA may also be referred to as long term evolution technology (long term evolution, LTE).

A9. UTRA measurement on a UTRA frequency.

A10. GSM measurement on a global system for mobile communications (global system for mobile communications, GSM) frequency.

A11. RSSI/CO measurement on an unlicensed frequency range other than A4.

A12. Reference signal time difference (reference signal time difference, RSTD) and enhanced cell identity (enhanced cell identity, E-CID) measurement on an E-UTRA non-serving frequency.

A13. Positioning reference signal (positioning reference signal, PRS)-based measurement. A13 may also be simplified as PRS measurement.

The terminal device may determine CSSFs of one or more measurements, determine, based on the CSSFs of the one or more measurements, delay indicators corresponding to the one or more measurements, and perform the one or more measurements based on the delay indicators corresponding to the one or more measurements.

The following uses Table 1 as an example to describe a manner of calculating a delay indicator of a measurement y.

Table 1

| Related status of a discontinuous reception (discontinuous reception, DRX) cycle (cycle) | Delay indicator T of the measurement y |
|---|---|
| The terminal device does not have DRX | $\text{Max}[200\text{ms}, \text{ceil}(5*K_p) \times \text{SMTC period}] * \text{CSSF}_y$ |
| A DRX cycle of the terminal device is less than or equal to 320 ms | $\text{Max}[200\text{ms}, \text{ceil}(1.5* 5 *K_p) *\text{Max}(\text{SMTC period}, \text{DRX cycle})] * \text{CSSF}_y$ |
| The terminal device does not have DRX | $\text{Max}[200\text{ms}, \text{ceil}(5*K_p) \times \text{SMTC period}] * \text{CSSF}_y$ |
| A DRX cycle of the terminal device is greater than 320 ms | $\text{ceil}(5* K_p) * \text{DRX cycle} * \text{CSSF}_y$ |

Herein, ceil(x) represents a smallest integer among integers not less than x, * represents a product, $\text{CSSF}_y$ represents a CSSF corresponding to the measurement y, $K_p$ represents a factor, and SMTC period represents a period of an SMTC.

Table 1 shows a manner in which the terminal device determines, based on the CSSF of the measurement y, the delay indicator corresponding to the measurement y. Actually, there may be a plurality of manners in which the terminal device determines, based on the CSSF, the delay indicator corresponding to the measurement. This is not limited in embodiments of this application.

A protocol defines two CSSF calculation manners. The two CSSF calculation manners include a manner of calculating $\text{CSSF}_{\text{outside\_gap}}$ and a manner of calculating $\text{CSSF}_{\text{within\_gap}}$. The following separately describes the two CSSF calculation manners.

I. Manner of calculating $\text{CSSF}_{\text{outside\_gap}}$.

For a non-reduced capability (reduced capability, RedCap) terminal device (or a terminal device that does not have a RedCap capability) or a RedCap terminal device, a manner of calculating $\text{CSSF}_{\text{outside\_gap}}$ is different, which is separately described below. The RedCap terminal device is equivalent to being provided (configured) with a set of software and hardware resources (which may be referred to as a searcher (searcher)) for performing a measurement gap-less measurement. In other words, the RedCap terminal device is provided with one searcher. Because the RedCap terminal device has only one searcher, the RedCap terminal device can perform only one measurement gap-less measurement at a same moment. The software and hardware resources may include, for example, a radio frequency channel and/or a baseband processing capability. The non-RedCap terminal device is equivalent to being provided (or configured) with two sets of software and hardware resources (equivalent to two searchers) for performing gap-less measurements. The following uses an example in which the two searchers include a searcher 1 and a searcher 2. Correspondingly, the non-RedCap terminal device may perform a maximum of two measurement gap-less measurements at a same moment.

First manner: For a non-RedCap terminal device.

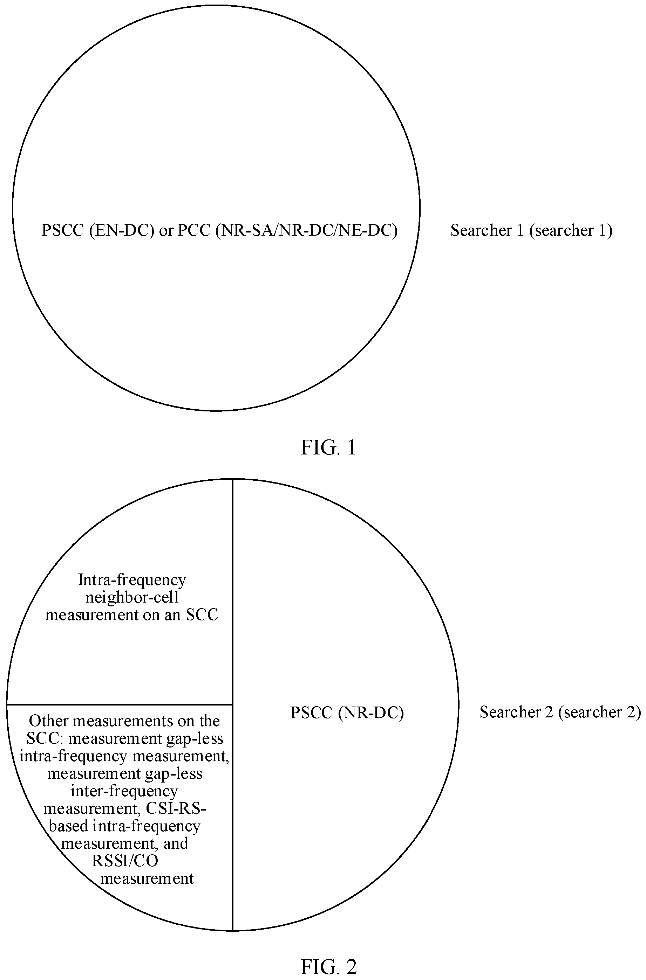

FIG. 1 shows a division manner of a searcher 1.

As shown in FIG. 1, the searcher 1 may be specifically configured to perform an intra-frequency measurement of an NR primary secondary cell (primary secondary cell, PSCell) in an evolved universal terrestrial radio access new radio-dual connection (evolved universal terrestrial radio access new radio-dual connection, EN-DC) communication architecture, an intra-frequency measurement of an NR primary cell (primary cell, PCell) in an NR standalone (standalone, SA) communication architecture, an intra-frequency measurement of an NR PCell in an NR-DC communication architecture, or an intra-frequency measurement of an NR PCell in a (new radio evolved universal terrestrial radio access-dual connection, NE-DC) communication architecture. The intra-frequency measurement of the PSCell is performed on a PSCell carrier (PSCell carrier, PSCC). Therefore, the intra-frequency measurement of the PSCell may also be referred to as an intra-frequency measurement on the PSCC, or referred to as a PSCC intra-frequency measurement for short. Similarly, the intra-frequency measurement of the PCell may also be referred to as an intra-frequency measurement on a primary cell carrier (PCell carrier, PCC), or referred to as a PCC intra-frequency measurement for short.

Correspondingly, a CSSF of the intra-frequency measurement on the PSCC in the EN-DC communication architecture is 1. A CSSF of the intra-frequency measurement on the PCC in the NR SA, NR-DC, or NE-DC communication architecture is 1.

FIG. 2 shows a division manner of a searcher 2.

As shown in FIG. 2, an NR PSCC in an NR-DC communication architecture is fixedly allocated with half of a measurement opportunity of the searcher 2. Correspondingly, a CSSF of an intra-frequency measurement on the PSCC in the NR-DC communication architecture is 2.

Still as shown in FIG. 2, if the terminal device has a secondary cell (secondary cell, SCell) on a frequency range 2 (frequency range 2, FR2), and the terminal device measures an intra-frequency neighboring cell on a secondary cell carrier (secondary cell carrier, SCC), the intra-frequency neighboring cell measurement on the SCC is allocated with half of the remaining measurement opportunity of the searcher 2. Correspondingly, in the NR-DC communication architecture, the intra-frequency neighboring cell measurement on the SCC is allocated with 1/4 of the measurement opportunity, and a CSSF of the intra-frequency neighboring cell measurement on the SCC is 4. In a communication architecture other than NR-DC (for example, EN-DC, NR SA, or NE-DC), intra-frequency neighboring cell measurement on the SCC is allocated with 1/2 of the measurement opportunity. Correspondingly, a CSSF of the intra-frequency neighboring cell measurement on the SCC is 2.

Still as shown in FIG. 2, all the remaining measurements: a measurement gap-less intra-frequency measurement on the SCC, a measurement gap-less inter-frequency measurement on the SCC, a CSI-RS-based intra-frequency measurement, and an RSSI/CO measurement equally share the remaining measurement opportunity of the searcher 2. Correspondingly, a CSSF of any one of all the remaining measurements: a measurement gap-less intra-frequency measurement on the SCell, a measurement gap-less inter-frequency measurement on the SCC, a CSI-RS-based intra-frequency measurement, and RSSI/CO measurement is a reciprocal of a measurement opportunity allocated to the any one measurement.

Second manner: For a RedCap terminal device.

1. If there is no other measurement gap-less measurement than an intra-frequency measurement on a PCC, the intra-frequency measurement on the PCC uses the whole measurement opportunity of a searcher. Correspondingly, a CSSF of the intra-frequency measurement on the PCC is 1. If there are other measurement gap-less measurements than an intra-frequency measurement on a PCell, the intra-frequency measurement on the PCC uses half of the measurement opportunity of the searcher. Correspondingly, the CSSF of the intra-frequency measurement on the PCC is 2.

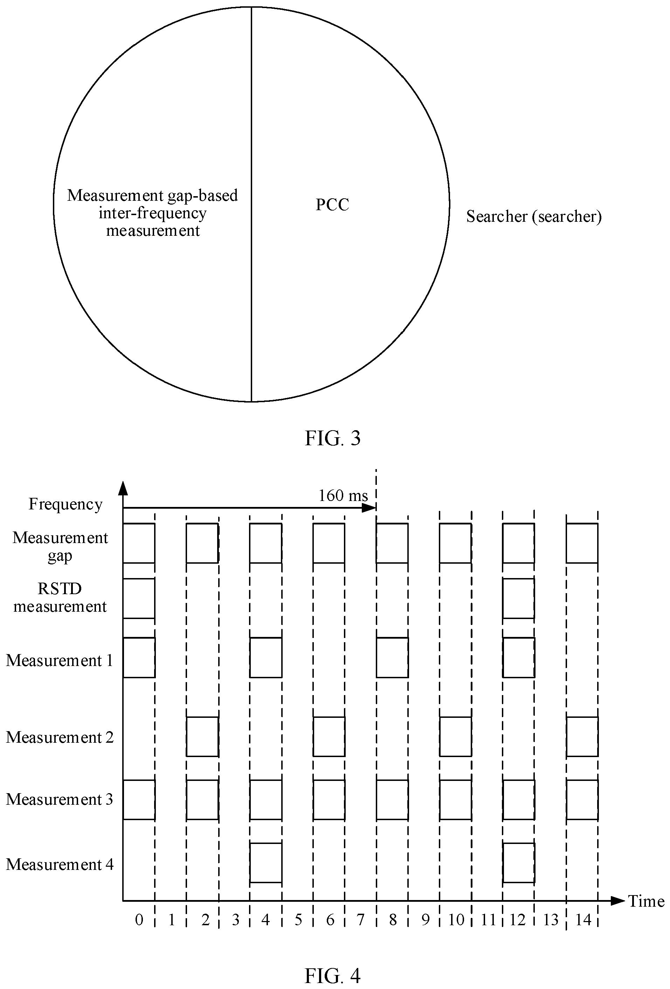

FIG. 3 shows a division manner of a searcher. As shown in FIG. 3, an intra-frequency measurement on a PCC uses half of a measurement opportunity of the searcher. Correspondingly, a CSSF of the intra-frequency measurement on the PCC is 2.

2. All the remaining measurement gap-less inter-frequency measurements equally share the remaining measurement opportunity of the searcher. A CSSF of any one of all the remaining measurement gap-less inter-frequency measurements is a reciprocal of a measurement opportunity allocated to the any one measurement. The RedCap UE usually supports only one carrier. Therefore, an SCC measurement and a CSI-RS measurement are not involved.

Still as shown in FIG. 3, all the remaining measurement gap-less inter-frequency measurements equally share the remaining measurement opportunity of the searcher.

II. Manner of calculating $CSSF_{within\_gap}$.

The following uses an EN-DC communication architecture as an example to describe a manner of calculating $CSSF_{within\_gap}$.

1. It is assumed that an E-UTRA RSTD measurement with a PRS period greater than 160 ms, or an E-UTRA RSTD measurement with a PRS period equal to 160 ms but configured with a positioning reference signal muting information indication (prs-MutingInfo-r9) field may not need to share a measurement opportunity with another measurement. Correspondingly, a CSSF of the E-UTRA RSTD measurement with the PRS period greater than 160 ms, or the E-UTRA RSTD measurement with the PRS period equal to 160 ms but configured with the positioning reference signal muting information indication (prs-MutingInfo-r9) field is 1. The prs-MutingInfo-r9 field indicates a positioning reference signal group that is activated and/or muted in a period.

An RSTD measurement with a PRS period greater than 160 ms, or an RSTD measurement with a PRS period equal to 160 ms but configured with a positioning reference signal muting information indication (prs-MutingInfo-r9) field may be referred to as a long-period RSTD measurement. An RSTD measurement with a PRS period greater than 160 ms, or an RSTD measurement with a PRS period equal to 160 ms but configured with a positioning reference signal muting information indication (prs-MutingInfo-r9) field in E-UTRA may be referred to as a long-period E-UTRA RSTD measurement.

2. It is assumed that all measurement gap-based measurements, other than a long-period E-UTRA RSTD measurement, participate in contention for measurement opportunities.

For each measurement opportunity j, the terminal device may calculate a quantity of measurements (that is, candidate measurements) that may be performed within the measurement opportunity j. The candidate measurements include at least one of the following measurements a to e.

    a. SSB-based measurement that meets a fifth condition on an NR frequency.
    For example, the fifth condition may be that a measurement window of the SSB-based measurement is completely covered by effective measurement time of the measurement opportunity j.
    b. CSI-RS-based measurement that meets a sixth condition on an NR frequency.
    For example, the sixth condition may be that a measurement window of the CSI-RS-based measurement is completely covered by effective measurement time of the measurement opportunity j.
    c. E-UTRA measurement.
    In an EN-DC scenario, a PCell of a 4G base station configures a measurement on a to-be-measured NR frequency. Therefore, an E-UTRA measurement may be considered as an NR inter-RAT measurement.
    d. UTRA measurement.
    e. RSSI/CO measurement that meets a seventh condition on an NR frequency.

For example, the seventh condition is that a measurement window of the RSSI/CO measurement is completely covered by effective measurement time of the measurement opportunity j.

A manner in which the terminal device calculates $CSSF_{within\_gap}$ varies with a configuration of the network device, which is separately described below.

Case 1: The network device does not configure a measurement gap sharing mechanism for the terminal device; or the network device configures a measurement gap sharing mechanism for the terminal device, and the sharing mechanism is equal distribution.

In case 1, for a formula for calculating a CSSF of a measurement i by the terminal device, refer to the following formula (1). The measurement i may be any measurement gap-based measurement performed by the terminal device.

$$CSSF_i = max_j\left\lceil R_i \times \left(M_{intra,i,j} + M_{inter,i,j}\right)\right\rceil \qquad (1)$$

Herein, $\lceil\ \rceil$ represents rounding up, and $R_i$ is a maximum value of a ratio of a quantity of measurement opportunities in which all measurement gap-based measurements i may be used as candidate measurements to a quantity of measurement opportunities that are not used for a long-period E-UTRA RSTD measurement within any period of 1280 ms.

If the measurement opportunity j is used to perform a long-period E-UTRA RSTD measurement, $M_{intra,i,j}=0$, and $M_{inter,i,j}=0$; or if the measurement opportunity j is not used to perform a long-period E-UTRA RSTD measurement, $M_{intra,i,j}$ is a total quantity of intra-frequency measurements (such as one or more of SSB-based intra-frequency measurements on the N frequency, CSI-RS-based intra-frequency measurements on the NR frequency, or intra-frequency RSSI/CO measurements on the NR frequency) that can be used as candidate measurements, and $M_{inter,i,j}$ is a total quantity of inter-frequency measurements (such as one or more of SSB-based inter-frequency measurements, CSI-RS-based inter-frequency measurements, inter-frequency RSSI/CO measurements, E-UTRA measurements, or UTAN measurements on the NR frequency) that can be used as candidate measurements.

Case 2: The network device configures a measurement gap sharing mechanism, the sharing mechanism is uneven distribution, and a measurement i belongs to intra-frequency measurements (for example, SSB-based intra-frequency measurements on the NR frequency, CSI-RS-based intra-frequency measurements on the NR frequency, and intra-frequency RSSI/CO measurements on the NR frequency). In this case, for a formula for determining a CSSF of the measurement i by the terminal device, refer to the following formula (2).

$$CSSF_i = max_j \left\lceil R_i \times \left( K_{intra,j} \times M_{intra,i,j} \right) \right\rceil \qquad (2)$$

If $M_{intra,i,j}$ =0, $K_{intra,j}$ =1; or otherwise $K_{intra,j}$ =1/X, where X is a measurement proportion allocated to intra-frequency measurements in a measurement gap sharing configuration.

Case 3: The network device configures a measurement gap sharing mechanism, the sharing mechanism is uneven distribution, and a measurement i belongs to inter-frequency measurements (for example, SSB-based inter-frequency measurements, CSI-RS-based inter-frequency measurements, inter-frequency RSSI/CO measurements, E-UTRA measurements, and UTAN measurements on the NR frequency). In this case, for a formula for determining a CSSF of the measurement i by the terminal device, refer to the following formula (3).

$$CSSF_i = max_j \left\lceil R_i \times \left( K_{inter,j} \times M_{inter,i,j} \right) \right\rceil \qquad (3)$$

If $M_{intra,i,j}$=0, $K_{intra,j}$=1; or otherwise, $K_{intra,j}$=1/(1-X).

The following describes a manner of calculating $CSSF_{within\_gap}$ by using an example in which the network device configures one RSTD measurement whose PRS period is 320 ms and four measurement gap-based measurements (specifically including a measurement 1, a measurement 2, a measurement 3, and a measurement 4) for the terminal device, and the network device does not configure a sharing mechanism for the terminal device.

FIG. 4 is a diagram of a measurement gap, a long-period RSTD measurement, and time-frequency locations of four measurement gap-based measurements. In FIG. 4, for example, a horizontal coordinate represents time, and a vertical coordinate represents frequency. For ease of description, in FIG. 4, the time specifically includes a measurement opportunity 0 to a measurement opportunity 14.

In FIG. 4, for example, measurement opportunities for a measurement gap include a measurement opportunity 0, a measurement opportunity 2, a measurement opportunity 4, a measurement opportunity 6, a measurement opportunity 8, a measurement opportunity 10, a measurement opportunity 12, and a measurement opportunity 14. Measurement opportunities for an RSTD measurement include the measurement opportunity 0 and the measurement opportunity 12. A measurement 1 corresponds to the measurement opportunity 0, the measurement opportunity 4, the measurement opportunity 8, and the measurement opportunity 12. Measurement opportunities for a measurement 2 include the measurement opportunity 2, the measurement opportunity 6, the measurement opportunity 10, and the measurement opportunity 14. Measurement opportunities for a measurement 3 include the measurement opportunity 0, the measurement opportunity 2, the measurement opportunity 4, the measurement opportunity 6, the measurement opportunity 8, the measurement opportunity 10, the measurement opportunity 12, and the measurement opportunity 14. Measurement opportunities for a measurement 4 include the measurement opportunity 4 and the measurement opportunity 12.

With reference to FIG. 4, the following describes how the terminal device calculates CSSFs of the measurement 1 to the measurement 4.

For the measurement 1, a maximum value of $M_{intra,i,j}$ + $M_{inter,i,j}$ is 3, and one of the four measurement opportunities is occupied by the long-period RSTD measurement every 320 ms. In this case, a value of $R_i$ is 4/3. Therefore, the terminal device may determine, according to the foregoing formula (1), that the CSSF of the measurement 1 is 4.

For the measurement 2, a maximum value of $M_{intra,i,j}$ + $M_{inter,i,j}$ is 2, and none of the measurement opportunities in which the measurement 2 becomes a candidate measurement is used for the long-period RSTD measurement. In this case, a value of $R_i$ is 1. Therefore, the terminal device may determine, according to the foregoing formula (1), that the CSSF of the measurement 2 is 2.

For the measurement 3, a maximum value of $M_{intra,i,j}$ + $M_{inter,i,j}$ within 160 ms is 3, and one of the eight measurement opportunities within every 320 ms is occupied by the RSTD. In this case, a value of $R_i$ is 8/7. Therefore, the terminal device may determine, according to the foregoing formula (1), the CSSF of the measurement 3 is $\lceil 8/7*3 \rceil$, that is, 4.

For the measurement 4, a maximum value of $M_{intra,i,j}$ + $M_{inter,i,j}$ within 160 ms is 3, and it is determined that the measurement opportunities in which the measurement 4 becomes a candidate measurement are not occupied by the RSTD. In this case, a value of $R_i$ is 1. Therefore, the terminal device may determine, according to the foregoing formula (1), that the CSSF of the measurement 4 is 3.

The network device may configure a measurement gap for the terminal device by using a terminal device or a frequency band (or a frequency range) as a granularity. A measurement gap configured for the terminal device by using a frequency range as a granularity may be referred to as a per-FR gap. The frequency range is, for example, a frequency range 1 (frequency range 1, FR1) and FR2. A measurement gap configured for the terminal device by using a terminal device as a granularity may be referred to as a per-user equipment measurement gap (per-UE measurement gap, Per-UE gap).

The protocol also defines measurement gaps of a plurality of patterns (patterns), and patterns of measurement gaps that can be selected by the terminal device in different cases. Table 2 shows patterns of measurement gaps that can be selected by the terminal device in different cases. The pattern may also be referred to as a format.

Table 2

| Granularity of a configured measurement gap | Frequency range corresponding to a serving cell (serving cell) | Frequency range corresponding to a measurement frequency | ID of an available pattern of a measurement gap |
|---|---|---|---|
| Per-UE gap | FR1 or FR1+FR2 | Non (non)-NR radio access technology (radio access technology, RAT) | 0, 1, 2, 3 |
| | | FR1 and/or FR2 | 0-11, 24, 25 |
| | | Non-NR RAT; FR1 and/or FR2 | 0, 1, 2, 3, 4, 6, 7, 8, 10, 24 |
| | FR2 | Only (only) non-NR RAT | 0, 1, 2, 3 |
| | | FR1 only | 0-11, 24, 25 |
| | | FR1 and FR1 | 0-11, 24, 25 |
| | | Non-NR RAT; FR1 and/or FR2 | 0, 1, 2, 3, 4, 6, 7, 8, 10, 24 |
| | | FR2 only | 12-23 |
| Per-FR gap | FR1 if configured (a serving cell on FR1 is configured) | Non-NR RAT only; (a measurement frequency exists only on E-UTRA) | 0-11 |
| | Only a serving cell on FR2 is configured | | 0-11, 24, 25 |
| | FR1 if configured | A measurement frequency exists only on FR1 | 0, 1, 2, 3, 4, 6, 7, 8, 10, 24 |
| | Only a serving cell on FR2 is configured | | 0, 1, 2, 3 |
| | Only a serving cell on FR1 is configured | A measurement frequency exists only on FR2 | 0-11, 24, 25 |
| | FR2 if configured | | 0-11, 24, 25 |
| | FR1 if configured | Non-NR RAT and FR1 | 0, 1, 2, 3, 4, 6, 7, 8, 10 |
| | Only a serving cell on FR2 is configured | | No gap (that is, a measurement is performed in a gap-less manner) |
| | FR1 if configured | FR1 and FR2; | 0-11 |

(continued)

| Granularity of a configured measurement gap | Frequency range corresponding to a serving cell (serving cell) | Frequency range corresponding to a measurement frequency | ID of an available pattern of a measurement gap |
|---|---|---|---|
| | FR2 if config-ured | non-NR RAT; FR2 | 12-23 |
| | FR1 if configured | | 0, 1, 2, 3, 4, 6, 7, 8, 10 |
| | FR2 if configured | | 12-23 |
| | FR1 if configured | Non-NR RAT and FR1 | 0, 1, 2, 3, 4, 6, 7, 8, 10 |
| | FR2 if configured | FR1 and FR2 | 12-23 |

When the terminal device supports the per-FR gap, but there is no serving cell in a frequency range in which the terminal device performs a measurement gap-based measurement, the terminal device may need to perform the measurement gap-based measurement in a measurement gap-less manner. For example, refer to Table 2. The terminal device has a serving cell on FR2, but has no serving cell on FR1. The network device configures a per-FR gap for the terminal device, and the network device configures a measurement gap-based measurement on FR1 for the terminal device. Therefore, the terminal device can perform the measurement gap-based measurement only in a measurement gap-less manner.

With reference to the foregoing manner of calculating $CSSF_{outside\_gap}$ and the foregoing manner of calculating $CSSF_{within\_gap}$, it can be learned that the manner of calculating $CSSF_{outside\_gap}$ is applicable to calculating a measurement gap-less intra-frequency measurement, and is irrelevant to whether the network device configures a measurement gap. The manner of calculating $CSSF_{withiu\_gap}$ is related to a measurement gap configured by the network device.

However, when the terminal device has no serving cell on a frequency range and the terminal device supports a per-frequency range measurement gap configuration, the network device provides a per-frequency range measurement gap configuration for the terminal device or the network device does not provide a measurement gap configuration for the terminal device, and the terminal device actually performs a measurement in a measurement gap-less manner (or may be expressed as that the terminal device is configured with a measurement gap-based measurement, but actually performs the measurement gap-based measurement in a measurement gap-less manner), if the terminal device calculates a CSSF in a manner of calculating $CSSF_{outside\_gap}$, but the network device configures a measurement gap for the terminal device, the terminal device may confuse. This is because the terminal device cannot determine whether to ignore the measurement gap to calculate the CSSF. However, if the terminal device calculates a CSSF in a manner of calculating $CSSF_{within\_gap}$, but the terminal device may not be able to determine a measurement gap, or the network device may not configure a measurement gap for the terminal device, the terminal device cannot calculate the CSSF. Therefore, neither the manner of calculating $CSSF_{within\_gap}$ nor the manner of calculating $CSSF_{outside\_gap}$ is not applicable to calculating the CSSF.

In view of this, an embodiment of this application provides a communication method. In the method, a terminal device has no serving cell on a specific frequency range (for example, a first frequency range) (there is no serving cell in particular FR) and supports a per-frequency range measurement gap configuration (for per-FR measurement gap capable UE), and is provided with a per-frequency range measurement gap configuration or is not provided with a measurement gap configuration. The terminal device may determine CSSFs of N measurement gap-based measurements based on information about the N measurement gap-based measurements, where N is a positive integer, and N measurement gap-based measurement frequencies are located on the first frequency range. The method provides a manner applicable to calculating a CSSF in a case (that is, a case in which the terminal device has no serving cell on a first frequency range and supports a per-frequency range measurement gap configuration, and is provided with a per-frequency range measurement gap configuration or is not provided with a measurement gap configuration). In addition, in the method, the terminal device may determine CSSFs of the N measurement gap-based measurements based on the information about the N measurement gap-based measurements on the first frequency range, regardless of whether a network device configures a measurement gap for the terminal device. Therefore, a manner of determining the CSSFs is applicable to a case in which the network device does not configure a measurement gap for the terminal device and the network device configures a per-frequency range measurement gap configuration for the terminal device, thereby improving applicability of the method.

The method provided in embodiments of this application is applicable to any communication scenario, for example, a 5G communication scenario or a future evolved communication scenario. The following describes an example of a scenario to which embodiments of this application are applicable.

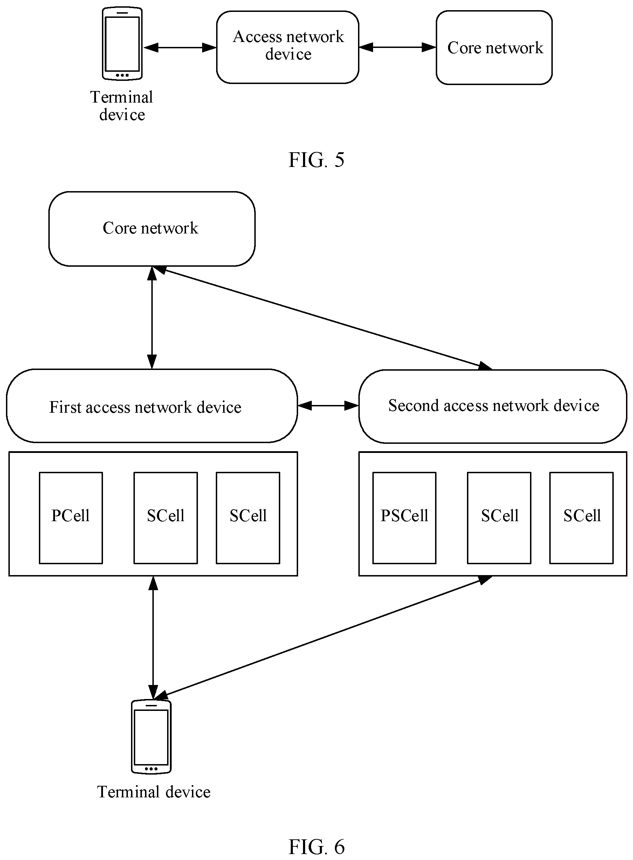

FIG. 5 is a diagram of a scenario to which an embodiment of this application is applicable.

As shown in FIG. 5, a terminal device may communicate with a core network by using an access network device. The access network device is, for example, a 4G base station, a 5G base station, or a base station in a future evolution process. For example, the core network is a 5G core network. For an implementation of the terminal device, refer to the foregoing description. The access network device in FIG. 5 may include one or more cells.

When the access network device is a 5G base station, FIG. 5 may be considered as a diagram of an SA communication architecture.

FIG. 6 is a diagram of another scenario to which an embodiment of this application is applicable. Alternatively, FIG. 6 may be understood as a diagram of an architecture of a communication system. Different from FIG. 5, a terminal device in FIG. 6 may access a core network by using a first access network device and a second access network device.

In FIG. 6, the first access network device is used as a master node (master node), and the second access network device is used as a secondary node (secondary node). A plurality of cells of the master node (that is, the first access network device in FIG. 6) may be referred to as a master cell group (master cell group, MCG), and a plurality of cells of the secondary node (that is, the second access network device base station in FIG. 6) may be referred to as a secondary cell group (secondary cell group, SCG). A primary cell in the MCG is referred to as a PCell, and a cell other than the primary cell in the MCG is referred to as an SCell. A primary cell in the SCG is referred to as a PSCell, and a cell other than the primary cell in the SCG is referred to as an SCell.

In a possible implementation, the first access network device may be a 5G base station, and the second access network device may be a 4G base station. In this case, FIG. 6 may be considered as a diagram of an NE-DC communication architecture.

In a possible implementation, the first access network device may be a 5G base station, and the second access network device may be a 5G base station. In this case, FIG. 6 may be considered as a diagram of an NR-DC communication architecture. Optionally, the master node (that is, the first access network device) may use a sub-6G frequency range, and the secondary node (that is, the second access network device) may use a millimeter-wave frequency range.

In a possible implementation, the first access network device may be a 4G base station, and the second access network device may be a 5G base station. In this case, FIG. 6 may be considered as a diagram of an EN-DC communication architecture.

The following describes a method provided in embodiments of this application with reference to the accompanying drawings. In the accompanying drawings corresponding to embodiments of this application, all steps represented by using dashed lines are optional steps. The terminal device in embodiments of this application may be, for example, the terminal device in FIG. 5 or FIG. 6. The network device in embodiments of this application may be, for example, the access network device or the core network in FIG. 5, or may be, for example, the first access network device or the core network in FIG. 6. In addition, the network device in embodiments of this application may be specifically, for example, the PCell in the first access network device in FIG. 6.

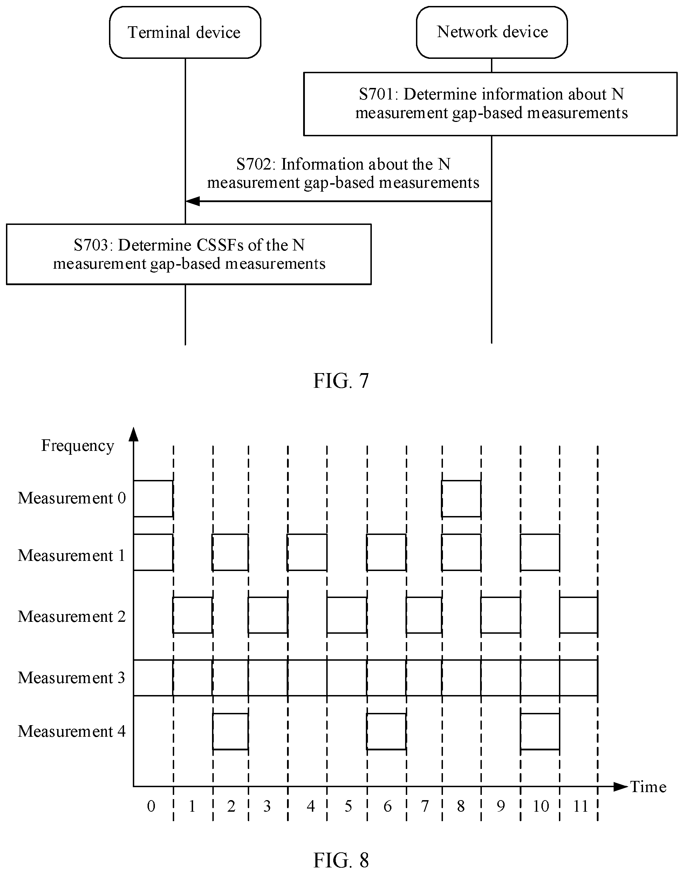

FIG. 7 is a schematic flowchart of a communication method according to an embodiment of this application. The schematic flowchart includes the following steps.

S701: A network device determines information about N measurement gap-based measurements. N is an integer greater than or equal to 1.

For example, the N measurement gap-based (gap-based) measurements may be understood as N measurements that need to be supported by a measurement gap, or may be further understood as types of the N measurements that belong to measurement gap-supported measurements.

In this embodiment of this application, an example in which measurement frequencies of the N measurement gap-based measurements are all located on a first frequency range is used. That measurement frequencies of the N measurement gap-based measurements are all located on a first frequency range may be understood as that the terminal device performs the N measurement gap-based measurements on the first frequency range. The first frequency range is any frequency range, for example, may be FR1 or FR2.

In an example, the N measurement gap-based measurements may include a first type of measurement and/or a second type of measurement. The first type of measurement may be referred to as mobility measurement, and is used by the network device to determine a mobility-related decision of a terminal device. The second type of measurement may be referred to as positioning measurement, and is used by the network device to determine a location of the terminal device. The following separately describes measurement types that may be included in the first type of measurement and the second type of measurement by using examples.

1. The first type of measurement includes at least one of the following measurements B1 to B5. When the N measurement gap-based measurements include the first type of measurement, it may be considered that the N measurement gap-based measurements include at least one of the following measurements B1 to B5. Correspondingly, the information about the N measurement gap-based measurements may include information about the first type of measurement.

B1. Synchronization signal-based inter-frequency measurement. The measurement shown in B1 may also be referred to as a synchronization signal inter-frequency measurement.

The synchronization signal-based inter-frequency measurement may be used to determine a serving cell of the terminal device.

B2. CSI-RS-based inter-frequency measurement. The measurement shown in B2 may also be referred to as a CSI-RS inter-frequency measurement.

The CSI-RS-based inter-frequency measurement may be used to determine channel state information between the terminal device and a cell.

B3. UTRA measurement.

The UTRA measurement may be used to determine whether the terminal device is handed over between network types, for example, determine whether the terminal device is handed over from a 5G network to a 3G network.

B4. Evolved universal terrestrial radio access (evolution universal terrestrial radio access, E-UTRA) measurement.

The E-UTRA measurement is a measurement of an E-UTRA frequency. The E-UTRA measurement may be used to determine whether the terminal device is handed over between networks, for example, determine whether the terminal device is handed over from a 5G network to a 4G network.

B5. Inter-frequency RSSI/CO measurement.

The inter-frequency RSSI/CO measurement may be used to determine received signal strength or channel occupancy between the terminal device and a non-serving cell.

B1 to B6 are examples for describing the first type of measurement included in the N measurement gap-based measurements. Actually, the first type of measurement included in the N measurement gap-based measurements may further include another measurement. This is not specifically limited in this embodiment of this application.

2. The positioning measurement includes at least one of the following measurements B6 to B8. When the N measurement gap-based measurements include the second type of measurement, it may be considered that the N measurement gap-based measurements include at least one of the following measurements B6 to B8. Correspondingly, the information about the N measurement gap-based measurements may include information about the second type of measurement.

B6. RSTD inter-frequency measurement on an NR frequency.

For example, the RSTD measurement on the NR frequency may include a long-period RSTD measurement, and the long-period RSTD measurement included on the NR frequency may also be referred to as a long-period NR RSTD measurement for short. The NR RSTD measurement includes an NR RSTD measurement whose PRS period is greater than 160 ms, and an NR RSTD measurement whose PRS period is equal to 160 ms and for which the network device configures a prs-MutingInfo-r9 field for the terminal device.

B7. RSTD inter-frequency measurement on an E-UTRA frequency.

The RSTD inter-frequency measurement on the E-UTRA frequency may be understood as an E-UTRA positioning reference signal-based RSTD measurement. The RSTD inter-frequency measurement on the E-UTRA frequency includes a long-period E-UTRA RSTD measurement.

B8. PRS measurement.

B6 to B8 are examples for describing the second type of measurement included in the N measurement gap-based measurements. Actually, the second type of measurement included in the N measurement gap-based measurements may further include another measurement. This is not specifically limited in this embodiment of this application.

If N is 1, the N measurement gap-based measurements are one measurement gap-based measurement, and correspondingly, the information about the N measurement gap-based measurements is information about the one measurement gap-based measurement. Alternatively, if N is an integer greater than 1, the N measurement gap-based measurements are a plurality of measurement gap-based measurements. Correspondingly, the information about the N measurement gap-based measurements may include N pieces of first information, and one piece of first information in the N pieces of first information is information about one measurement gap-based measurement in the N measurement gap-based measurements; or the information about the N measurement gap-based measurements may be one piece of first information, and the one piece of first information indicates the information about the N measurement gap-based measurements.

For example, if the terminal device is to perform one measurement gap-based measurement, the network device may determine information about the one measurement gap-based measurement. Alternatively, when the information about the N measurement gap-based measurements includes N pieces of first information, the network device may determine the N pieces of first information together, or the network device may separately determine the N pieces of first information. Alternatively, if the information about the N measurement gap-based measurements includes one piece of first information, the network device may determine the one piece of first information.

The following describes content of the information about the N measurement gap-based measurements by using an example.

For example, the information about the N measurement gap-based measurements may indicate at least one of C1 to C5.

C1. R time domain locations, where R is an integer greater than or equal to 1.

For example, the information about the N measurement gap-based measurements may explicitly indicate the R time domain locations.

If N is 1, the information about the N measurement gap-based measurements may explicitly indicate information about R time domain locations of one measurement gap-based measurement. In this case, the R time domain locations are used by the terminal device to perform the one measurement gap-based measurement. One time domain location may indicate (or correspond to) one time period, or may be understood as one measurement window or one measurement opportunity for performing a measurement gap-based measurement.

If N is an integer greater than 1, the information about the N measurement gap-based measurements may indicate R time domain locations of the N measurement gap-based measurements.

For example, when the information about the N measurement gap-based measurements includes N pieces of first information, one piece of first information in the N pieces of first information may explicitly indicate information about at least one time domain location of one measurement gap-based measurement. Correspondingly, the N pieces of first information also explicitly indicate information about the R time domain locations of the N measurement gap-based measurements. In this case, the R time domain locations are used by the terminal device to perform the N measurement gap-based measurements. The R time domain locations may also be understood as some or all of the time domain locations of the N measurement gap-based measurements.

When the information about the N measurement gap-based measurements includes one piece of first information, the one piece of first information may indicate the R time domain locations of the N measurement gap-based measurements.

Alternatively, the information about the N measurement gap-based measurements may implicitly indicate the R time domain locations.

For example, the information about the N measurement gap-based measurements may indicate N measurement gap-based measurement frequencies, but the terminal device may determine the R time domain locations based on the N measurement gap-based measurement frequencies. In other words, although the information about the N measurement gap-based measurements does not carry information about the R time domain locations, the terminal device can determine the R time domain locations based on the information about the N measurement gap-based measurements. This is equivalent to that the information about the N measurement gap-based measurements may implicitly indicate the R time domain locations.

C2. Quantity of measurement frequencies.

For example, the information about the N measurement gap-based measurements may explicitly indicate the quantity of measurement frequencies.

If N is 1, the information about the N measurement gap-based measurements may explicitly indicate information about a measurement frequency corresponding to one measurement gap-based measurement, which is equivalent to explicitly indicating the quantity of the N measurement gap-based measurement frequencies.

If N is an integer greater than 1, the information about the N measurement gap-based measurements may explicitly indicate measurement frequencies corresponding to the N measurement gap-based measurements, which is equivalent to explicitly indicating the quantity of the N measurement gap-based measurement frequencies]

Alternatively, the information about the N measurement gap-based measurements may implicitly indicate the quantity of measurement frequencies.

For example, the information about the N measurement gap-based measurements indicates a time domain location corresponding to each of the N measurement gap-based measurements. The terminal device may determine the quantity of the N measurement gap-based measurement frequencies based on the time domain location corresponding to each of the N measurement gap-based measurements. This is equivalent to that the information about the N measurement gap-based measurements implicitly indicates the quantity of the N measurement gap-based measurement frequencies.

C3. First quantity. The first quantity may be used to determine CSSFs of the N measurement gap-based measurements, or may be understood as that CSSFs of the N measurement gap-based measurements may be related to the first quantity.

For example, the information about the N measurement gap-based measurements may explicitly indicate the first quantity.

For example, the information about the N measurement gap-based measurements may include the first quantity.

Alternatively, the information about the N measurement gap-based measurements may implicitly indicate the first quantity.

For example, the information about the N measurement gap-based measurements indicates that the terminal device determines the CSSFs of the N measurement gap-based measurements based on the first quantity, or indicates, to the terminal device, that the CSSFs of the N measurement gap-based measurements are related to the first quantity. In this case, although the information about the N measurement gap-based measurements does not carry the first quantity, it is equivalent to implicitly indicating the first quantity.

C4. Time domain locations of any two of the N measurement gap-based measurements do not overlap. In the case of C4, N is an integer greater than 1.

For example, that time domain locations of any two measurement gap-based measurements do not overlap may be understood as that at least one time domain location of one of the any two measurement gap-based measurements does not overlap any one of at least one time domain location of the other measurement gap-based measurement. That the two time domain locations do not overlap may be understood as that time periods indicated by the two time domain locations do not overlap. For example, if a time domain location 1 indicates 0 ms to 40 ms, and a time domain location 2 indicates 80 ms to 120 ms, it may be considered that the time domain location 1 does not overlap the time domain location 2.

For example, the information about the N measurement gap-based measurements may explicitly indicate that the time domain locations of the any two of the N measurement gap-based measurements do not overlap.

For example, the information about the N measurement gap-based measurements may include information indicating that the time domain locations of the any two of the N measurement gap-based measurements do not overlap, which is equivalent to explicitly indicating that the time domain locations of the any two of the N measurement gap-based measurements do not overlap.

Alternatively, the information about the N measurement gap-based measurements may implicitly indicate that the time domain locations of the any two of the N measurement gap-based measurements do not overlap.

For example, the information about the N measurement gap-based measurements may indicate R time domain locations, and the R time domain locations do not overlap, which is equivalent to that the information about the N measurement gap-based measurements implicitly indicates that the time domain locations of the any two of the N measurement gap-based measurements do not overlap.

C5. Measurement-related information configured for one measurement gap-based measurement, where N is 1.

When N is 1, the information about the N measurement gap-based measurements may indicate measurement-related information configured for one measurement gap-based measurement. The measurement-related information configured for one measurement gap-based measurement includes but is not limited to information about a measurement frequency and/or information about a time domain location of the one measurement gap-based measurement. In this case, it may be understood that the network device configures one measurement gap-based measurement for the terminal device.

The foregoing describes content of the information about the N measurement gap-based measurements. The following describes an example of a manner in which the network device determines the information about the N measurement gap-based measurements.

Manner 1: The network device may determine the information about the N measurement gap-based measurements.

For example, the network device may configure the information about the N measurement gap-based measurements by using a protocol, which is equivalent to that the network device determines the information about the N measurement gap-based measurements.

Alternatively, the network device determines the information about the N measurement gap-based measurements based on requirements of the N measurement gap-based measurements.

Manner 2: The network device receives the information about the N measurement gap-based measurements from another device, which is equivalent to determining the information about the N measurement gap-based measurements. The another device is, for example, a device other than the network device in a communication system in which the network device is located. For example, the network device is a primary cell, and the another device may be a primary secondary cell.

Manner 3: The network device determines the information about the N measurement gap-based measurements with reference to the manner 1 and the manner 2.

For example, the network device may determine information about K1 measurement gap-based measurements based on requirements of the K1 measurement gap-based measurements in the N measurement gap-based measurements. In addition, the network device may receive information about K2 measurement gap-based measurements other than the K1 measurement gap-based measurements in the N measurement gap-based measurements from another device. This is equivalent to that the network device determines the information about the N measurement gap-based measurements. A sum of K1 and K2 is N, and both K1 and K2 are integers greater than or equal to 1.

S702: The network device sends the information about the N measurement gap-based measurements to the terminal device. Correspondingly, the terminal device receives the information about the N measurement gap-based measurements from the network device.

When N is an integer greater than 1, and the information about the N measurement gap-based measurements includes N pieces of first information, the network device may separately send the N pieces of first information to the terminal device, or the network device may send the N pieces of first information to the terminal device together.

A manner in which the network device sends the information about the N measurement gap-based measurements varies with a type of measurement included in the N measurement gap-based measurements, which is described below by using examples.

1. If the N measurement gap-based measurements include the first type of measurement (that is, at least one of the mobility measurements in B1 to B5), correspondingly, the information about the N measurement gap-based measurements includes the information about the first type of measurement.

Optionally, the network device may add the information about the first type of measurement to higher layer signaling. The network device sends the higher layer signaling to the terminal device. Correspondingly, the terminal device receives the higher layer signaling from the network device, which is equivalent to that the terminal device receives the information about the first type of measurement. The higher layer signaling is, for example, radio resource control (radio resource control, RRC) signaling.

2. If the N measurement gap-based measurements include the second type of measurement (that is, at least one of the positioning measurements in B6 to B8), correspondingly, the information about the N measurement gap-based measurements includes the information about the second type of measurement.

Optionally, the network device may add the information about the second type of measurement to a long term evolution positioning protocol (long term evolution positioning protocol, LPP) message. The network device sends the LPP message to the terminal device. Correspondingly, the terminal device receives the LPP message from the network device, which is equivalent to that the terminal device receives the information about the second type of measurement.

3. If the N measurement gap-based measurements include the information about the first type of measurement and the information about the second type of measurement, the network device may send the information about the first type of measurement to the terminal device by using higher layer signaling, and send the information about the second type of measurement to the terminal device by using an LPP message.

In a possible implementation, the terminal device in this embodiment of this application has no serving cell on a specific frequency range (for example, the first frequency range) (there is no serving cell in particular FR), and supports a per-frequency range measurement gap configuration (for per-FR measurement gap capable UE). That the terminal device supports a per-frequency range measurement gap configuration may be understood as that the terminal device supports performing a measurement on a specific frequency range based on a measurement gap, or may be understood as that the terminal device has a capability of performing a measurement on a specific frequency range based on a measurement gap.

In a possible implementation, the terminal device may be further configured with a per-frequency range measurement gap configuration. For example, the network device configures a per-frequency range measurement gap configuration for the terminal device, or the protocol configures a per-frequency range measurement gap configuration for the terminal device. The per-frequency range measurement gap configuration may be understood as a measurement gap configured by using a frequency range as a granularity, and indicates a measurement gap on a frequency range. The measurement gap corresponding to the frequency range is, for example, a measurement gap corresponding to the first frequency range and/or a measurement gap corresponding to a second frequency range. The second frequency range may be different from the first frequency range. For example, the first frequency range is FR1, and the second frequency range is FR2; or the second frequency range is FR2, and the first frequency range is FR1.

For example, the network device may first send the per-frequency range measurement gap configuration to the terminal device, and then send the information about the N measurement gap-based measurements to the terminal device.

Alternatively, the network device may simultaneously send the per-frequency range measurement gap configuration and the information about the N measurement gap-based measurements to the terminal device.

The network device may separately send the per-frequency range measurement gap configuration and the information about the N measurement gap-based measurements to the terminal device. Alternatively, the network device may send the per-frequency range measurement gap configuration and the information about the N measurement gap-based measurements to the terminal device together. For example, the network device may add the per-frequency range measurement gap configuration and the information about the N measurement gap-based measurements to second information, and the network device sends the second information to the terminal device, which is equivalent to sending the per-frequency range measurement gap configuration and the information about the N measurement gap-based measurements.

In another possible implementation, the network device does not provide (or configure) a measurement gap configuration on the first frequency range for the terminal device. In other words, the terminal device does not have a measurement gap configuration on the first frequency range. For example, the network device does not configure a measurement gap with a granularity of a frequency range for the terminal device, and does not configure a measurement gap with a granularity of a frequency range for the terminal device.

In a possible implementation, the network device may further determine that the terminal device further performs a first measurement in addition to the N measurement gap-based measurements. In this case, the network device may send measurement-related information of the first measurement to the terminal device. Correspondingly, the terminal device receives the measurement-related information of the first measurement from the network device. The measurement-related information of the first measurement may include but is not limited to information about a measurement frequency and/or information about a time domain location of the first measurement.

The network device may separately send the information about the N measurement gap-based measurements and the measurement-related information of the first measurement to the terminal device. Alternatively, the network device may add the information about the N measurement gap-based measurements and the measurement-related information of the first measurement to third information. The network device sends the third information to the terminal device. Correspondingly, the terminal device receives the third information from the network device, which is equivalent to receiving the information about the N measurement gap-based measurements and the measurement-related information of the first measurement.

In a first example, the first measurement may include at least one of the following measurements shown in D1 to D4.

D1. Measurement gap-less SSB intra-frequency measurement on a second frequency range. D1 may also be described as a measurement gap-less and SSB-based intra-frequency measurement on the second frequency range.

D2. Measurement gap-less SSB inter-frequency measurement on a second frequency range. D2 may also be described as a measurement gap-less and SSB-based inter-frequency measurement on the second frequency range.

D3. CSI-RS-based intra-frequency measurement on a second frequency. D3 may also be described as a CSI-RS-based intra-frequency measurement on the second frequency range.

D4. Intra-frequency RSSI or channel occupancy CO measurement on a second frequency range.

The first measurement in the first example may correspond to a case in which the terminal device is a non-RedCap terminal device. In other words, when the terminal device is a non-RedCap terminal device, the first measurement may be at least one of C1 to C4.

In a second example, the first measurement may include the following measurement shown in E1 and/or the following measurement E2.

E1. Measurement gap-less SSB measurement configured in a secondary cell on a second frequency range. E1 may also be described as a measurement gap-less and SSB-based measurement configured in the secondary cell on the second frequency range.

For example, in an EN-DC communication system, the first measurement may be a measurement gap-less SSB measurement configured in a secondary cell of a 5G base station]

E2. Measurement gap-less SSB inter-frequency measurement on a second frequency range. E2 may also be described as a measurement gap-less and SSB-based measurement on the second frequency range.

For example, in an NR SA, NE-DC, or NR-DC communication architecture, the first measurement may be a measurement gap-less SSB measurement in a 5G base station.

In an example, the first measurement in the second example may correspond to a case in which the terminal device is a RedCap terminal device. In other words, when the terminal device is a RedCap terminal device, the first measurement may be E1 and/or E2.

D1 to D4 and E1 and E2 may be all understood as possible examples of the first measurement. Actually, there may be a plurality of first measurements. This is not limited in this embodiment of this application.

In a possible implementation, the first quantity is a total quantity of first measurements and the N measurement gap-based measurements. When the network device determines the first measurement and the N measurement gap-based measurements, it is equivalent to that the first quantity is determined.

In a possible implementation, the network device may further determine that the terminal device further performs a second measurement in addition to the N measurement gap-based measurements. In this case, the network device may send measurement-related information of the second measurement to the terminal device. Correspondingly, the terminal device receives the measurement-related information of the second measurement from the network device. The measurement-related information of the second measurement may include but is not limited to information about a measurement frequency and/or information about a time domain location of the second measurement. For a manner in which the network device sends the measurement-related information of the second measurement to the terminal device, refer to the foregoing content in which the network device sends the measurement-related information of the first measurement to the terminal device.

In a first example, the second measurement may include an intra-frequency measurement on the second frequency range.

For example, the second measurement may include at least one of the following measurements shown in F1 to F3.

F1. PSCell-configured intra-frequency measurement in an EN-DC communication architecture on the second frequency range, PCell intra-frequency measurement in an NR-SA communication architecture on the second frequency range, PCell intra-frequency measurement in an NR-DC communication architecture on the second frequency range, or PCell intra-frequency measurement in an NE-DC communication architecture on the second frequency range.

F2. PSCell intra-frequency measurement in an NR-DC communication architecture on the second frequency range.

F3. SCell intra-frequency neighbor-cell measurement in an NR-DC communication architecture on the second frequency range, SCell intra-frequency neighbor-cell measurement in an EN-DC communication architecture on the second frequency range, SCell intra-frequency neighbor-cell measurement in an NR-SA communication system on the second frequency range, or SCell intra-frequency neighbor-cell measurement in an NE-DC communication architecture on the second frequency range.

In an example, the second measurement in the first example may correspond to a case in which the terminal device is a non-RedCap terminal device. In other words, when the terminal device is a non-RedCap terminal device, the first measurement may be at least one of F1 to F3.

In a second example, the second measurement may include the measurement shown in G1.

G1. PCell intra-frequency measurement on the second frequency range.

F1 to F3 and G1 may be understood as possible examples of the second measurement. Actually, there may be a plurality of second measurements. This is not limited in this embodiment of this application.

S703: The terminal device determines CSSFs of the N measurement gap-based measurements.

For example, the CSSFs of the N measurement gap-based measurements may include a CSSF of at least one of the N measurement gap-based measurements. For example, the CSSFs of the N measurement gap-based measurements may include N CSSFs, and one of the N CSSFs correspond to one of the N measurement gap-based measurements. In other words, one of the N CSSFs is a CSSF of one of the N measurement gap-based measurements.

For example, the terminal device may determine the CSSFs of the N measurement gap-based measurements based on the information about the N measurement gap-based measurements. In other words, the CSSFs of the N measurement gap-based measurements are related to the information about the N measurement gap-based measurements.

When a manner in which the terminal device determines the CSSFs of the N measurement gap-based measurements varies with the information about the N measurement gap-based measurements. The following describes the manner in different cases.

When the information about the N measurement gap-based measurements indicates C1 (that is, the R time domain locations), a manner in which the terminal device determines the CSSFs of the N measurement gap-based measurements may include the following first CSSF determining manner and the following second CSSF determining manner. Details are separately described below.

In the first CSSF determining manner, the terminal device determines that a CSSF of one of the N measurement gap-based measurements is a second quantity. The one measurement gap-based measurement is any one of the N measurement gap-based measurements.

For example, the second quantity is a maximum quantity of time domain locations that overlap a time domain location of the one measurement gap-based measurement in the R time domain locations. The second quantity may be understood as a maximum value of a quantity of time domain locations that overlap a time domain location of the one measurement gap-based measurement in the R time domain locations, or may be understood as a maximum quantity of time domain locations that are the same as one time domain location of the one measurement gap-based measurement in the R time domain locations. The time domain location of the one measurement gap-based measurement may also be described as a time domain location corresponding to the one measurement gap-based measurement, and may be understood as a time domain location of the one measurement gap-based measurement.

Optionally, the second quantity corresponds to first duration. That the second quantity corresponds to first duration may be understood as that the second quantity is the maximum quantity of time domain locations that overlap the time domain location of the one measurement gap-based measurement in the R time domain locations in the first duration. The first duration may be configured in the terminal device by using the protocol or the network device, and the first duration is, for example, 160 ms.

In a possible implementation, a CSSF of each of the N measurement gap-based measurements is a maximum quantity of time domain locations that overlap a time domain location of each measurement gap-based measurement in the R time domain locations.

In an example, the maximum quantity of time domain locations that overlap the time domain location of each measurement gap-based measurement in the R time domain locations is specifically a maximum quantity of time domain locations that overlap the time domain location of each measurement gap-based measurement in the R time domain locations in the first duration. For a manner in which the terminal device obtains the first duration and content of the first duration, refer to the foregoing description.

In the first CSSF determining manner, the terminal device may determine the CSSFs of the N measurement gap-based measurements based on the R time domain locations, and does not need to determine the CSSFs by using information about the measurement gap-based measurements, so that the CSSF determining manner is more applicable. Even if the terminal device has no serving cell on the first frequency range and supports a per-frequency range measurement gap configuration, the terminal device may determine the CSSFs in the first CSSF determining manner. In addition, in the first CSSF determining manner, a quantity of overlapping time domain locations of the N measurement gap-based measurements is further considered, which is equivalent to considering a delay that may be generated when the terminal device performs a measurement, so that the determined CSSF has more reference value for determining a delay indicator for performing the measurement by the terminal device, that is, the determined CSSF is more accurate.

For example, FIG. 8 is a diagram of R time domain locations of N measurement gap-based measurements according to an embodiment of this application. In FIG. 8, a horizontal coordinate represents time, and a vertical coordinate represents frequency. In FIG. 8, for example, the N measurement gap-based measurements include a measurement 0, a measurement 1, a measurement 2, a measurement 3, and a measurement 4, the first duration is 160 ms, duration indicated by one time domain location is 40 ms, and time specifically includes a time domain location 0 to a time domain location 11.

In FIG. 8, for example, a time domain location of the measurement 0 includes a time domain location 0 and a time domain location 8, a time domain location of the measurement 1 includes a time domain location 0, a time domain location 2, a time domain location 4, a time domain location 6, a time domain location 8, and a time domain location 10, a time domain location of the measurement 2 includes a time domain location 1, a time domain location 3, a time domain location 5, a time domain location 7, a time domain location 9, and a time domain location 11, a time domain location of the measurement 3 includes a time domain location 0 to a time domain location 11, and the measurement 4 includes a time domain location 2, a time domain location 6, and a time domain location 10. Correspondingly, the R time domain locations include the time domain location 0 to the time domain location 11.

The following uses FIG. 8 as an example to describe CSSFs of the measurement 0 to the measurement 4.

For the measurement 0, a quantity of time domain locations that overlap the time domain location 0 corresponding to the measurement 0 in the R time domain locations is 3, and the three time domain locations specifically include the time domain location 0 corresponding to the measurement 0, the time domain location 0 corresponding to the measurement 1, and the time domain location 0 corresponding to the measurement 1. In this way, the terminal device may determine that a maximum quantity of time domain locations that overlap the time domain location of the measurement 0 in the R time domain locations is 3, to determine that the CSSF of the measurement 0 is 3.

For the measurement 1, a quantity of time domain locations that overlap the time domain location 0 corresponding to the measurement 1 in the R time domain locations is 2, and the two time domain locations specifically include the time domain location 0 corresponding to the measurement 1 and the time domain location 0 corresponding to the measurement 0; and a quantity of time domain locations that overlap the time domain location 2 of the measurement 1 in the R time domain locations corresponding to the N measurement gap-based measurements is 3, and the three time domain locations specifically include the time domain location 2 corresponding to the measurement 1, the time domain location 2 corresponding to the measurement 3, and the time domain location 2 corresponding to the measurement 4. In this way, the terminal device may determine that a maximum quantity of time domain locations that overlap the time domain location corresponding to the measurement 1 in the R time domain locations is 3, so that the terminal device determines that the CSSF of the measurement 1 is 3.

For the measurement 2, a quantity of time domain locations that overlap the time domain location 1 of the measurement 2 in the R time domain locations is 2, and the two time domain locations specifically include the time domain location 1 corresponding to the measurement 2 and the time domain location 1 corresponding to the measurement 3; and a quantity of time domain locations that overlap the time domain location 3 of the measurement 2 in the R time domain locations is 2, and the two time domain locations include the time domain location 2 corresponding to the measurement 1 and the time domain location 2 corresponding to the measurement 3. In this way, the terminal device may determine that a maximum quantity of time domain locations that overlap the time domain location corresponding to the measurement 2 in the R time domain locations is 2, so that the terminal device determines that the CSSF of the measurement 2 is 2.

For the measurement 3, a quantity of time domain locations that overlap the time domain location 0 corresponding to the measurement 3 in the R time domain locations is 3, and the three time domain locations specifically include the time domain location 0 corresponding to the measurement 3, the time domain location 0 corresponding to the measurement 1, and the time domain location corresponding to the measurement 2. By analogy, the terminal device may determine that a maximum quantity of time domain locations that overlap the time domain location corresponding to the measurement 3 in the R time domain locations is 3, so that the terminal device determines that the CSSF of the measurement 3 is 3.

For the measurement 4, a quantity of time domain locations that overlap the time domain location 2 corresponding to the measurement 4 in the R time domain locations is 3, and the three time domain locations specifically include the time domain location 2 corresponding to the measurement 4, the time domain location 2 corresponding to the measurement 3, and the time domain location 2 corresponding to the measurement 4. In this way, the terminal device may determine that a maximum quantity of time domain locations that overlap the time domain location corresponding to the measurement 4 in the R time domain locations is 2, so that the terminal device determines that the CSSF of the measurement 4 is 2.

In the second CSSF determining manner, the terminal device determines that CSSFs of M measurement gap-based measurements are a second quantity, and CSSFs of P measurement gap-based measurements are a first value. The M measurement gap-based measurements belong to the N measurement gap-based measurements. The P measurement gap-based measurements are measurements other than the M measurement gap-based measurements in the N measurement gap-based measurements. M is an integer greater than 1 or equal to N, P is an integer greater than or equal to 0, and a sum of P and M is N.

In an example, when M is greater than 1, a CSSF of each of the M measurement gap-based measurements is the second quantity. Similarly, when P is greater than 1, a CSSF of each of the P measurement gap-based measurements is the first value.

In an example, the P measurement gap-based measurements may include, for example, at least one of an RSTD inter-frequency measurement, an E-UTRA measurement, and a UTRA measurement.

Optionally, the RSTD inter-frequency measurement included in the P measurement gap-based measurements may include a long-period E-UTRA RSTD inter-frequency measurement and/or a long-period NR RSTD measurement. For meanings of the long-period E-UTRA RSTD inter-frequency measurement and the long-period NR RSTD measurement, refer to the foregoing description.

For example, the first value may be configured in the terminal device by using the protocol, or may be configured in the terminal device by using the network device. Optionally, the first value is, for example, 1, 2, or 3.

In the second CSSF determining manner, the terminal device may directly determine that the CSSFs of the P measurement gap-based measurements are the first value, which helps simplify a process of determining the CSSFs by the terminal device. The terminal device may preferentially consider performing the P measurement gap-based measurements. In addition, the terminal device determines the CSSFs of the M measurement gap-based measurements, and does not need to determine the CSSFs by using information about the measurement gap-based measurements. Therefore, the CSSF determining manner is more applicable. In addition, a possibility that time domain locations of the M measurement gap-based measurements overlap is further considered, which is equivalent to considering a delay that may be generated when the terminal device performs a measurement, so that the determined CSSF has more reference value for determining a delay indicator for performing the measurement by the terminal device, that is, the determined CSSF is more accurate.

When the information about the N measurement gap-based measurements indicates C2, that is, the quantity of measurement frequencies, the terminal device may determine the CSSFs of the N measurement gap-based measurements in a third CSSF determining manner.

In the third CSSF determining manner, the terminal device determines that the CSSFs of the N measurement gap-based measurements are the quantity of measurement frequencies.

In a possible implementation, the terminal device determines that a CSSF of any one of the N measurement gap-based measurements is the quantity of measurement frequencies.

In a possible implementation, if the terminal device is to perform the first measurement, the terminal device may determine that a CSSF of the first measurement is a fourth value. For a manner in which the terminal device obtains the fourth value, refer to the foregoing content in which the terminal device obtains the first value. The fourth value may be, for example, 1, 2, or 3.

If the terminal device is to perform the second measurement, the terminal device may determine that a CSSF of the second measurement is a fifth value. For a manner in which the terminal device obtains the fifth value, refer to the foregoing content in which the terminal device obtains the first value. The fifth value may be, for example, 1, 2, or 3. The fifth value may be the same as or different from the fourth value.

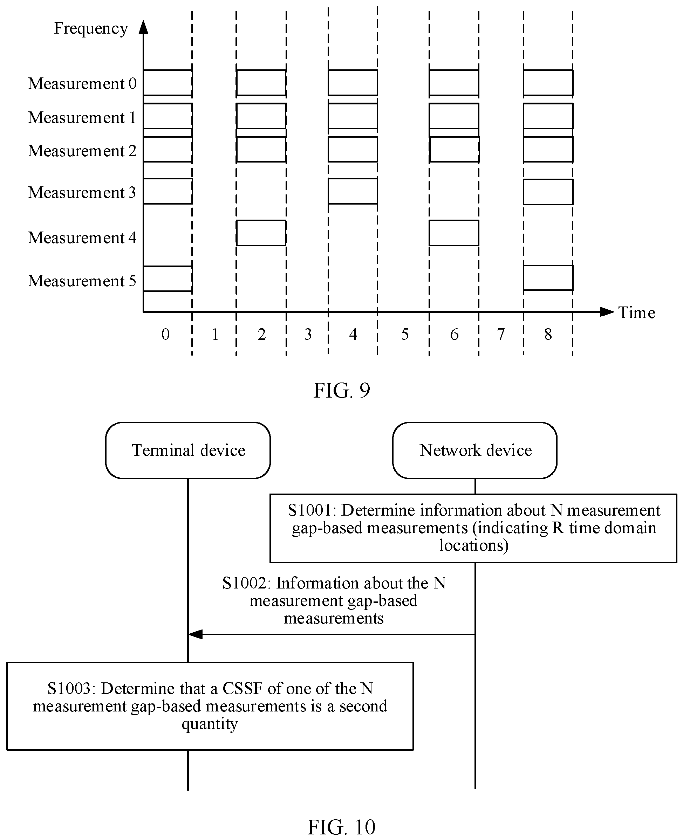

For example, FIG. 9 is a diagram of time domain locations corresponding to a plurality of measurements according to an embodiment of this application. In FIG. 9, a horizontal coordinate represents time, and a vertical coordinate represents frequency. In FIG. 9, for example, the N measurement gap-based measurements include a measurement 0, a measurement 1, a measurement 2, a measurement 3, a measurement 4, and a measurement 5, and time specifically includes a time domain location 0 to a time domain location 8. In addition, in FIG. 9, for example, the second measurement includes the measurement 0 and the measurement 1, and the N measurement gap-based measurements include the measurement 2 to the measurement 5.

In FIG. 9, for example, a time domain location of the measurement 0 includes a time domain location 0, a time domain location 2, a time domain location 4, a time domain location 6, and a time domain location 8, a time domain location of the measurement 1 includes a time domain location 0, a time domain location 2, a time domain location 4, a time domain location 6, and a time domain location 8, a time domain location of the measurement 2 includes a time domain location 0, a time domain location 2, a time domain location 4, a time domain location 6, and a time domain location 8, a time domain location of the measurement 3 includes a time domain location 0, a time domain location 4, and a time domain location 8, a time domain location of the measurement 4 includes a time domain location 2 and a time domain location 6, and a time domain location of the measurement 5 includes a time domain location 0 and a time domain location 8.

As shown in FIG. 9, the measurement frequencies of the N measurement gap-based measurements are 4. Therefore, the terminal device determines that a CSSF of any one of the measurement 2 to the measurement 5 is 4. In addition, the terminal device determines that CSSFs of the measurement 0 and the measurement 1 are both 1.

In the third CSSF determining manner, the terminal device may determine the CSSFs of the N measurement gap-based measurements based on the quantity of measurement frequencies of the N measurement gap-based measurements. In this way, the terminal device flexibly and simply determines the CSSFs of the N measurement gap-based measurements, and considers the N measurement gap-based measurements. In this way, the determined CSSFs of the N measurement gap-based measurements have good reference value for the terminal device to determine delay indicators of the N measurement gap-based measurements.

When the information about the N measurement gap-based measurements indicates C3, that is, the first quantity, the terminal device may determine the CSSFs of the N measurement gap-based measurements in a fourth CSSF determining manner.

In the fourth CSSF determining manner, the terminal device determines that the CSSFs of the N measurement gap-based measurements are related to the first quantity.

Optionally, the first quantity is a total quantity W of the N measurement gap-based measurements and first measurements. The total quantity W is a sum of a quantity of the N measurement gap-based measurements and a quantity of first measurements.

For example, the terminal device determines that a CSSF of one of the N measurement gap-based measurements is (2*W) or [3/(4*W)]. "*" represents a product.

When the terminal device does not perform the first measurement, or it may be understood that the quantity of first measurements is 0, the terminal device determines that the CSSF of one of the N measurement gap-based measurements is (2*N) or [3/(4*N)]. "*" represents a product.

A specific manner in which the terminal device determines CSSFs of various measurements (for example, the first measurement, the second measurement, and the N measurement gap-based measurements) varies with a type of the terminal device, which is separately described below.

1. The terminal device is a non-RedCap terminal device.

1-1. For the second measurement.

If the terminal device is to perform the second measurement, and the second measurement includes the measurement shown in F1 (that is, the PSCell intra-frequency measurement in the EN-DC communication system on the second frequency range, the PCell intra-frequency measurement in the NR-SA communication system on the second frequency range, the PCell intra-frequency measurement in the NR-DC communication system on the second frequency range, or the PCell intra-frequency measurement in the NE-DC communication system on the second frequency range, the terminal device determines that a CSSF of the measurement shown in F1 is equal to a sixth value. For a manner in which the terminal device obtains the sixth value, refer to the foregoing content in which the terminal device obtains the first value. The sixth value may be, for example, 1.

If the terminal device is to perform the second measurement, and the second measurement includes the measurement shown in F2 (that is, the PSCell intra-frequency measurement in the NR-DC communication system on the second frequency range), the terminal device determines that a CSSF of the measurement shown in F2 is equal to an eighth value. For a manner in which the terminal device obtains the seventh value, refer to the foregoing content in which the terminal device obtains the first value. The seventh value may be, for example, 2.

If the terminal device is to perform the second measurement, the second measurement includes the measurement shown in F3, and the measurement shown in F3 is specifically the SCell intra-frequency neighbor-cell measurement in the NR-DC communication system on the second frequency range, the terminal device determines that a CSSF of the measurement shown in F3 is a ninth value. For a manner in which the terminal device obtains the eighth value, refer to the foregoing content in which the terminal device obtains the first value. The eighth value may be, for example, 4.

Alternatively, the measurement shown in F3 is specifically the SCell intra-frequency neighbor-cell measurement in the EN-DC communication system on the second frequency range, the SCell intra-frequency neighbor-cell measurement in the NR-SA communication system on the second frequency range, or the SCell intra-frequency neighbor-cell measurement in the NE-DC communication system on the second frequency range, the terminal device determines that a CSSF of the measurement shown in F3 is a ninth value. For a manner in which the terminal device obtains the ninth value, refer to the foregoing content in which the terminal device obtains the first value. The ninth value may be, for example, 2.

1-2. For the N measurement gap-based measurements and the first measurement.

In another example, if the terminal device is to perform the first measurement, and the first measurement includes at least one of the measurements shown in D1 to D4 (that is, the SCell intra-frequency neighbor-cell measurement in the EN-DC communication system on the second frequency range, the SCell intra-frequency neighbor-cell measurement in the NR-SA communication system on the second frequency range, and the SCell intra-frequency neighbor-cell measurement in the NE-DC communication system on the second frequency range), the terminal device may determine the total quantity W of first measurements and the N measurement gap-based measurements.

For example, if the CSSF of the measurement shown in F3 is 4, the terminal device determines that a CSSF of any one of the first measurement and the N measurement gap-based measurements is [3/(4*W)]. Alternatively, if the CSSF of the measurement shown in F3 is 2, the terminal device determines that a CSSF of any one of the first measurement and the N measurement gap-based measurements is (2*W).

In an example, if the terminal device does not perform the first measurement (or it may be understood that the quantity of first measurements is 0), and the CSSF of the measurement shown in F3 is 4, the terminal device determines that a CSSF of any one of the first measurement and the N measurement gap-based measurements is [3/(4*N)]. Alternatively, if the terminal device does not perform the first measurement, and the CSSF of the measurement shown in F3 is 2, the terminal device determines that a CSSF of any one of the first measurement and the N measurement gap-based measurements is (2*N).

2. The terminal device is a RedCap terminal device.

2-1. For the second measurement.

If the terminal device is to perform the second measurement, the second measurement is the measurement shown in G1 (that is, the PCell intra-frequency measurement on the second frequency range), and the terminal device does not perform the first measurement and does not perform the N measurement gap-based measurements, the terminal device determines that a CSSF of the measurement shown in G1 is an eleventh value. For a manner in which the terminal device determines the tenth value, refer to the foregoing content in which the terminal device determines the first value. The tenth value may be, for example, 1.

If the terminal device is to perform the second measurement, the second measurement is the measurement shown in G1 (that is, the PCell intra-frequency measurement on the second frequency range), and the terminal device performs the first measurement and/or the N measurement gap-based measurements, the terminal device determines that a CSSF of the measurement shown in G1 is an eleventh value. For a manner in which the terminal device determines the eleventh value, refer to the foregoing content in which the terminal device determines the first value. The eleventh value may be, for example, 2.

2-2. For the N measurement gap-based measurements and the first measurement.

If the terminal device performs the first measurement, and the first measurement is, for example, the measurement shown in E1 and/or the measurement shown E2 (that is, the measurement gap-less SSB measurement configured in the secondary cell on the second frequency range, and/or the measurement gap-less SSB inter-frequency measurement on the second frequency range), the terminal device determines that a CSSF of any one of the first measurement and the N measurement gap-based measurements is (2*W).

If the terminal device does not perform the first measurement (or it may be understood that the quantity of first measurements is 0), the terminal device determines that the CSSFs of the N measurement gap-based measurements are (2*N).

In the foregoing manner, CSSFs of different measurements may be determined based on the type of the terminal device and the type of the measurement to be performed by the terminal device, so that manners of determining the CSSFs of the different measurements are more diversified. In addition, measurements on different frequency ranges are considered, and a more comprehensive CSSF determining manner is provided.

When the information about the N measurement gap-based measurements indicates C4 (that is, the time domain locations of the any two of the N measurement gap-based measurements do not overlap), the terminal device may determine the CSSFs in a fifth CSSF determining manner.

In the fifth CSSF determining manner, the terminal device determines that the CSSFs of the N measurement gap-based measurements are the second value.

In a possible implementation, a CSSF of each of the N measurement gap-based measurements is the second value. For a manner in which the terminal device obtains the second value, refer to the foregoing content in which the terminal device obtains the first value. The second value may be, for example, 1, 2, or 3.

In a possible implementation, time domain locations of any two measurements to be performed by the terminal device do not overlap.

For example, a time domain location of any one of the N measurement gap-based measurements does not overlap a time domain location of any one of the first measurements, and a time domain location of any one of the N measurement gap-based measurements does not overlap a time domain location of any one of the second measurements.

In this implementation, a CSSF of either of the first measurement and the second measurement may also be the second value.

In this manner, the network device is equivalent to indicating the terminal device to perform the N measurement gap-based measurements whose time domain locations do not overlap. Therefore, the N measurement gap-based measurements do not conflict with each other. Therefore, the terminal device may determine that the CSSFs of the N measurement gap-based measurements are the second value. In this way, it is simple for the terminal device to determine the CSSFs of the N measurement gap-based measurements, and this is of reference significance for the terminal device to determine a delay indicator for performing a measurement.

When the information about the N measurement gap-based measurements indicates C5 (that is, the measurement-related information configured for the one measurement gap-based measurement), the terminal device may determine the CSSFs in the fifth CSSF determining manner.

In the sixth CSSF determining manner, the terminal device determines that the CSSF of the one measurement gap-based measurement is a third value. For a manner in which the terminal device obtains the third value, refer to the foregoing content in which the terminal device obtains the first value. The third value may be, for example, 1, 2, or 3.

In this implementation, it is equivalent to that the network device configures only one measurement gap-based measurement on one frequency range. In other words, the terminal device performs only one measurement gap-based measurement on one frequency range. Therefore, there is no other measurement whose time domain location overlaps that of the one measurement gap-based measurement. Therefore, a CSSF of the one measurement gap-based measurement may be the third value. In this way, the terminal device may simply determine the CSSF of the one measurement gap-based measurement, and the CSSF is also of reference value for the terminal device to determine a delay indicator of the one measurement gap-based measurement.

When the information about the N measurement gap-based measurements indicates at least two of C1 to C5, the terminal device may use a seventh CSSF determining manner and an eighth CSSF determining manner, which are separately described below.

In the seventh CSSF determining manner, the terminal device may determine information with a highest priority in at least two types of information in C1 to C5, and determines the CSSFs of the N measurement gap-based measurements based on the information with the highest priority. Priorities of at least two types of information in C1 to C5 may be preconfigured in the terminal device by using the protocol, or may be configured by the network device for the terminal device.

For example, the terminal device may determine that a priority of C2 in the at least two types of information in C1 to C5 is the highest, and the terminal device may determine the CSSFs of the N measurement gap-based measurements in the foregoing third CSSF determining manner.

For another example, the terminal device may determine that a priority of C3 in the at least two types of information in C1 to C5 is the highest, and the terminal device may determine the CSSFs of the N measurement gap-based measurements in the foregoing fourth CSSF determining manner.

In the eighth CSSF determining manner, the terminal device determines that the CSSFs of the N measurement gap-based measurements may be determined based on an indication of the network device or the protocol.

For example, the network device may send first indication information to the terminal device, and correspondingly, the terminal device receives the first indication information. The first indication information indicates a manner of determining the CSSFs by the terminal device, and specifically indicates the terminal device to determine the CSSFs of the N measurement gap-based measurements in one of the foregoing first CSSF determining manner to the foregoing sixth CSSF determining manner.

The network device may send the first indication information and the information about the N measurement gap-based measurements together to the terminal device, or the network device may separately send the first indication information and the information about the N measurement gap-based measurements to the terminal device.

Optionally, the network device may determine, based on a specific case of the terminal device, a manner used by the terminal device to determine the CSSFs. In this case, in different cases, the terminal device may determine the CSSFs in different manners.

Alternatively, a priority sequence of the first CSSF determining manner to the sixth CSSF determining manner is configured for the terminal device by using the protocol, and the terminal device may determine the CSSFs of the N measurement gap-based measurements based on a CSSF determining manner with a highest priority.

In a possible implementation, after the terminal device determines a CSSF of one of the N measurement gap-based measurements, the terminal device may determine, based on the CSSF of the one measurement gap-based measurement, a delay indicator corresponding to the one measurement gap-based measurement.

Optionally, when performing the one measurement gap-based measurement, the terminal device may send a measurement result corresponding to the one measurement gap-based measurement to the network device by using the delay indicator corresponding to the one measurement gap-based measurement as a reference.

To improve applicability of a CSSF determining manner, an embodiment of this application provides a communication method. FIG. 10 is a schematic flowchart of a communication method according to an embodiment of this application. The schematic flowchart includes the following steps.

S1001: A network device determines information about N measurement gap-based measurements.

For example, the information about the N measurement gap-based measurements indicates R time domain locations. For meanings of the R time domain locations, content of the information about the N measurement gap-based measurements, and a manner in which the network device determines the information about the N measurement gap-based measurements, refer to the foregoing content of S701.

S1002: The network device sends the information about the N measurement gap-based measurements to a terminal device. Correspondingly, the terminal device receives the information about the N measurement gap-based measurements from the network device.

For a manner in which the network device sends the information about the N measurement gap-based measurements to the terminal device, refer to the foregoing content of S702.

S1003: The terminal device determines that a CSSF of one of the N measurement gap-based measurements is a second quantity.

In a possible implementation, the terminal device determines that a CSSF of each of the N measurement gap-based measurements is the second quantity.

In another possible implementation, the terminal device determines that a CSSF of one of M measurement gap-based measurements is the second quantity, and CSSFs of P measurement gap-based measurements are a first value.

For the first value, the second quantity, the P measurement gap-based measurements, and the M measurement gap-based measurements, refer to the foregoing content of S703.

Optionally, the terminal device has no serving cell on a first frequency range and supports a per-frequency range measurement gap configuration, and performs a measurement based on the per-frequency range measurement gap configuration or has no measurement gap configuration on the first frequency range. For content of supporting the per-frequency range measurement gap configuration, performing the measurement based on the per-frequency range measurement gap configuration, and having no measurement gap configuration on the first frequency range, refer to the foregoing description.

In this embodiment of this application, the terminal device determines the CSSFs of the N measurement gap-based measurements and the first quantity or the first value, so that determining the CSSFs is applicable to a case in which the network device does not configure a measurement gap configuration for the terminal device, thereby improving applicability of a CSSF determining manner.

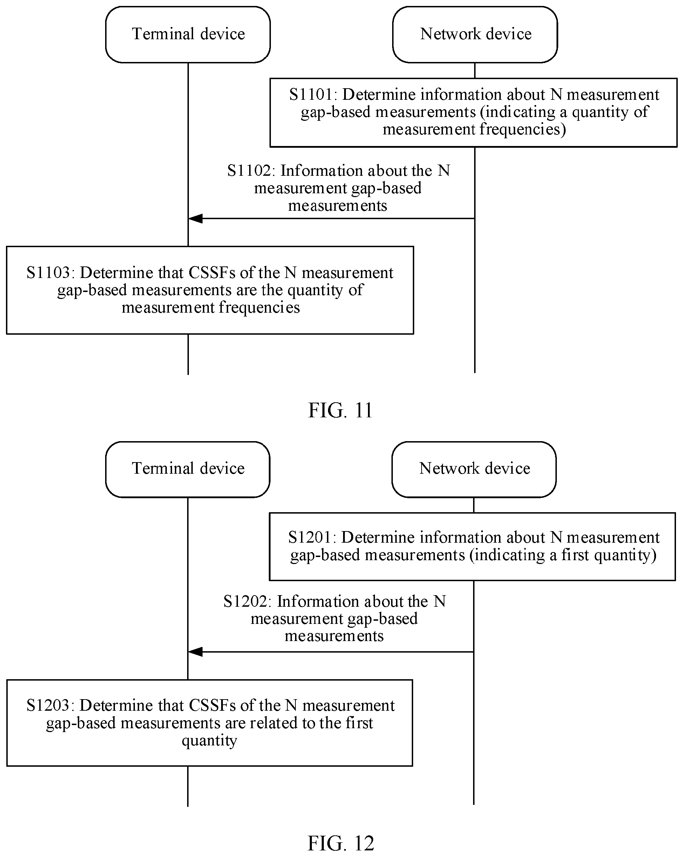

To improve applicability of a CSSF determining manner, an embodiment of this application provides a communication method. FIG. 11 is a schematic flowchart of a communication method according to an embodiment of this application. The schematic flowchart includes the following steps.

S1101: A network device determines information about N measurement gap-based measurements.

For example, the information about the N measurement gap-based measurements indicates a quantity of measurement frequencies. For content of the information about the N measurement gap-based measurements, and a manner in which the network device determines the information about the N measurement gap-based measurements, refer to the foregoing content of S701.

S1102: The network device sends the information about the N measurement gap-based measurements to a terminal device. Correspondingly, the terminal device receives the information about the N measurement gap-based measurements from the network device.

For a manner in which the network device sends the information about the N measurement gap-based measurements to the terminal device, refer to the foregoing content of S702.

S1103: The terminal device determines that CSSFs of the N measurement gap-based measurements are the quantity of measurement frequencies.

For content of S1103, refer to the foregoing content of S703. Details are not described herein again.

Optionally, the terminal device has no serving cell on a first frequency range and supports a per-frequency range measurement gap configuration, and performs a measurement based on the per-frequency range measurement gap configuration or has no measurement gap configuration on the first frequency range. For content of supporting the per-frequency range measurement gap configuration, performing the measurement based on the per-frequency range measurement gap configuration, and having no measurement gap configuration on the first frequency range, refer to the foregoing description.

In this embodiment of this application, the terminal device determines that the CSSFs of the N measurement gap-based measurements are related to the quantity of measurement frequencies, so that determining the CSSFs is applicable to a case in which the network device does not configure a measurement gap configuration for the terminal device, thereby improving applicability of a CSSF determining manner.

To improve applicability of a CSSF determining manner, an embodiment of this application provides a communication method. FIG. 12 is a schematic flowchart of a communication method according to an embodiment of this application. The schematic flowchart includes the following steps.

S1201: A network device determines information about N measurement gap-based measurements.

For example, the information about the N measurement gap-based measurements indicates a first quantity. For content of the first quantity and the information about the N measurement gap-based measurements, and a manner in which the network device determines the information about the N measurement gap-based measurements, refer to the foregoing content of S701.

S1202: The network device sends the information about the N measurement gap-based measurements to a terminal device. Correspondingly, the terminal device receives the information about the N measurement gap-based measurements from the network device.

For a manner in which the network device sends the information about the N measurement gap-based measurements to the terminal device, refer to the foregoing content of S702.

S1203: The terminal device determines that CSSFs of the N measurement gap-based measurements are related to the first quantity.

For example, the terminal device determines that a CSSF of one of the N measurement gap-based measurements is (2*W) or [3/(4*W)]. "*" represents a product, and W represents the first quantity.

Optionally, the terminal device has no serving cell on a first frequency range and supports a per-frequency range measurement gap configuration, and performs a measurement based on the per-frequency range measurement gap configuration or has no measurement gap configuration on the first frequency range. For content of supporting the per-frequency range measurement gap configuration, performing the measurement based on the per-frequency range measurement gap configuration, and having no measurement gap configuration on the first frequency range, refer to the foregoing description.

In this embodiment of this application, the terminal device determines that the CSSFs of the N measurement gap-based measurements are related to the first quantity, so that determining the CSSFs is applicable to a case in which the network device does not configure a measurement gap configuration for the terminal device, thereby improving applicability of a CSSF determining manner.

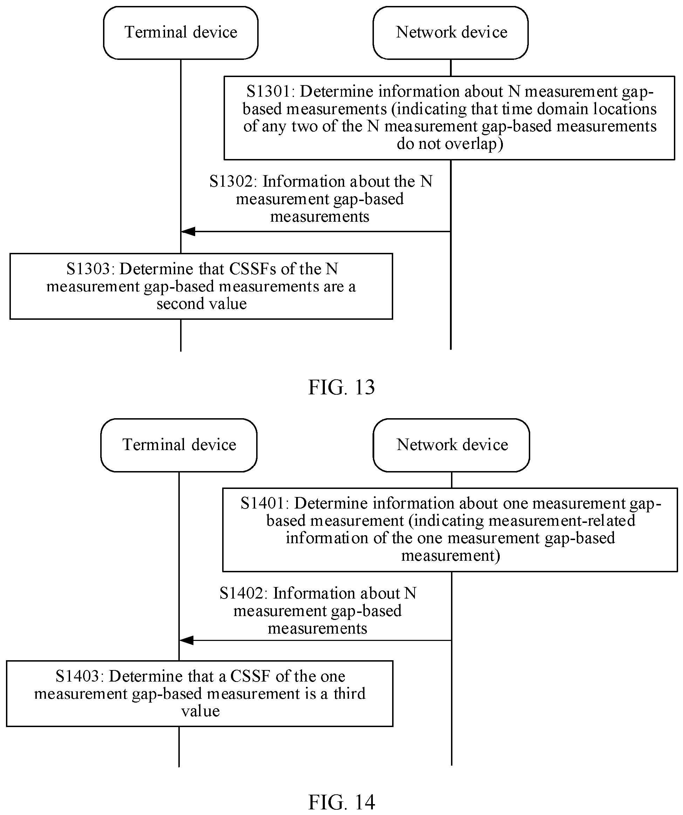

To improve applicability of a CSSF determining manner, an embodiment of this application provides a communication method. FIG. 13 is a schematic flowchart of a communication method according to an embodiment of this application. The schematic flowchart includes the following steps.

S1301: A network device determines information about N measurement gap-based measurements.

For example, the information about the N measurement gap-based measurements indicates that time domain locations of any two of the N measurement gap-based measurements do not overlap. For content that any two time-domain locations of measurement gap-based measurement in the N measurement gap-based measurements do not overlap, content of the N pieces of measurement gap-based information, and a manner in which the network device determines the N pieces of measurement gap-based measurement information, refer to the foregoing content of S701.

S1302: The network device sends the information about the N measurement gap-based measurements to a terminal device. Correspondingly, the terminal device receives the information about the N measurement gap-based measurements from the network device.

For a manner in which the network device sends the information about the N measurement gap-based measurements to the terminal device, refer to the foregoing content of S702.

S1303: The terminal device determines that CSSFs of the N measurement gap-based measurements are a second value.

For content of the second value, refer to the foregoing content of S703.

Optionally, the terminal device has no serving cell on a first frequency range and supports a per-frequency range measurement gap configuration, and performs a measurement based on the per-frequency range measurement gap configuration or has no measurement gap configuration on the first frequency range. For content of supporting the per-frequency range measurement gap configuration, performing the measurement based on the per-frequency range measurement gap configuration, and having no measurement gap configuration on the first frequency range, refer to the foregoing description.

In this embodiment of this application, the terminal device determines that the CSSFs of the N measurement gap-based measurements are the second value, so that determining the CSSFs is applicable to a case in which the network device does not configure a measurement gap configuration for the terminal device, thereby improving applicability of a CSSF determining manner. In addition, the terminal device does not need to perform complex calculation, so that the CSSF determining manner is simple.

To improve applicability of a CSSF determining manner, an embodiment of this application provides a communication method. FIG. 13 is a schematic flowchart of a communication method according to an embodiment of this application. The schematic flowchart includes the following steps.

S1401: A network device determines information about one measurement gap-based measurement.

For example, the information about the one measurement gap-based measurement indicates measurement-related information configured for the one measurement gap-based measurement. For content of the measurement-related information configured for the one measurement gap-based measurement and information about N measurement gap-based measurements, and a manner in which the network device determines the information about the N measurement gap-based measurements, refer to the foregoing content of S701.

S1402: The network device sends the information about the N measurement gap-based measurements to a terminal device. Correspondingly, the terminal device receives the information about the N measurement gap-based measurements from the network device.

For a manner in which the network device sends the information about the N measurement gap-based measurements to the terminal device, refer to the foregoing content of S702.

S1403: The terminal device determines that a CSSF of the one measurement gap-based measurement is a third value.

For content of the third value, refer to the foregoing content of S703.

Optionally, the terminal device has no serving cell on a first frequency range and supports a per-frequency range measurement gap configuration, and performs a measurement based on the per-frequency range measurement gap configuration or has no measurement gap configuration on the first frequency range. For content of supporting the per-frequency range measurement gap configuration, performing the measurement based on the per-frequency range measurement gap configuration, and having no measurement gap configuration on the first frequency range, refer to the foregoing description.

In this embodiment of this application, the terminal device determines that the CSSFs of the N measurement gap-based measurements are the third value, so that determining the CSSFs is applicable to a case in which the network device does not configure a measurement gap configuration for the terminal device, thereby improving applicability of a CSSF determining manner. In addition, the terminal device does not need to perform complex calculation, so that the CSSF determining manner is simple.

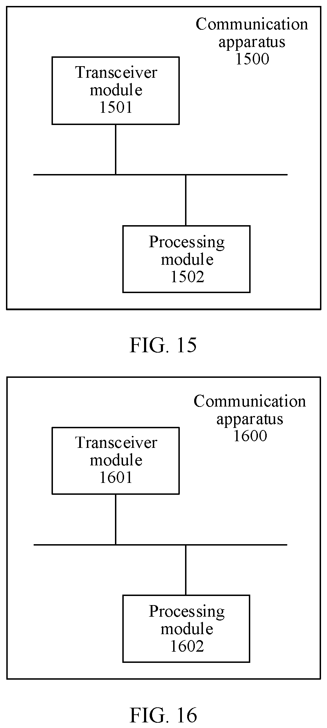

FIG. 15 is a diagram of a structure of a communication apparatus according to an embodiment of this application.

As shown in FIG. 15, the communication apparatus 1500 includes a transceiver module 1501 and a processing module 1502.

In this embodiment of this application, the communication apparatus 1500 may be configured to implement the functions of any one of the foregoing terminal devices. Correspondingly, the communication apparatus 1500 may perform the steps performed by the terminal device in any one of FIG. 7 and FIG. 10 to FIG. 14. Correspondingly, the communication apparatus 1500 may be configured to implement the functions of the terminal device in any one of FIG. 7 and FIG. 10 to FIG. 14.

In a first embodiment, the communication apparatus 1500 may be configured to implement the functions of the foregoing terminal device in FIG. 7.

For example, the transceiver module 1501 may be configured to implement S702, and the processing module 1502 may be configured to implement S703.

Optionally, the processing module 1502 may be configured to perform the foregoing first CSSF determining manner to the foregoing eighth CSSF determining manner. For specific content of the first CSSF determining manner to the eighth CSSF determining manner, refer to the foregoing description.

In a second embodiment, the communication apparatus 1500 may be configured to implement the functions of the foregoing terminal device in FIG. 10.

For example, the transceiver module 1501 may be configured to implement S1002, and the processing module 1502 may be configured to implement S1003.

In a third embodiment, the communication apparatus 1500 may be configured to implement the functions of the foregoing terminal device in FIG. 11.

For example, the transceiver module 1501 may be configured to implement S1102, and the processing module 1502 may be configured to implement S1103.

In a fourth embodiment, the communication apparatus 1500 may be configured to implement the functions of the foregoing terminal device in FIG. 12.

For example, the transceiver module 1501 may be configured to implement S1202, and the processing module 1502 may be configured to implement S1203.

In a fifth embodiment, the communication apparatus 1500 may be configured to implement the functions of the foregoing terminal device in FIG. 13.

For example, the transceiver module 1501 may be configured to implement S1302, and the processing module 1502 may be configured to implement S1303.

In a sixth embodiment, the communication apparatus 1500 may be configured to implement the functions of the foregoing terminal device in FIG. 14.

For example, the transceiver module 1501 may be configured to implement S1402, and the processing module 1502 may be configured to implement S1403.

FIG. 16 is a diagram of a structure of a communication apparatus according to an embodiment of this application. As shown in FIG. 16, the communication apparatus 1600 includes a transceiver module 1601 and a processing module 1602.

In this embodiment of this application, the communication apparatus 1600 may be configured to implement the functions of any one of the foregoing network devices. Correspondingly, the steps performed by the network device in any one of FIG. 7 and FIG. 10 to FIG. 14 may also be implemented. For example, the communication apparatus 1600 may be configured to implement the functions of the network device in any one of FIG. 7 and FIG. 10 to FIG. 14.

In a first embodiment, the communication apparatus 1600 may be configured to implement the functions of the foregoing network device in FIG. 7.

For example, the transceiver module 1601 may be configured to implement S702, and the processing module 1602 may be configured to implement S701.

In a second embodiment, the communication apparatus 1600 may be configured to implement the functions of the foregoing network device in FIG. 10.

For example, the transceiver module 1601 may be configured to implement S1002, and the processing module 1602 may be configured to implement S1001.

In a third embodiment, the communication apparatus 1600 may be configured to implement the functions of the foregoing network device in FIG. 11.

For example, the transceiver module 1601 may be configured to implement S1102, and the processing module 1602 may be configured to implement S1101.

In a fourth embodiment, the communication apparatus 1600 may be configured to implement the functions of the foregoing network device in FIG. 12.

For example, the transceiver module 1601 may be configured to implement S1202, and the processing module 1602 may be configured to implement S1201.

In a fifth embodiment, the communication apparatus 1600 may be configured to implement the functions of the foregoing network device in FIG. 13.

For example, the transceiver module 1601 may be configured to implement S1302, and the processing module 1602 may be configured to implement S1301.

In a sixth embodiment, the communication apparatus 1600 may be configured to implement the functions of the foregoing network device in FIG. 14.

For example, the transceiver module 1601 may be configured to implement S1402, and the processing module 1602 may be configured to implement S1401.

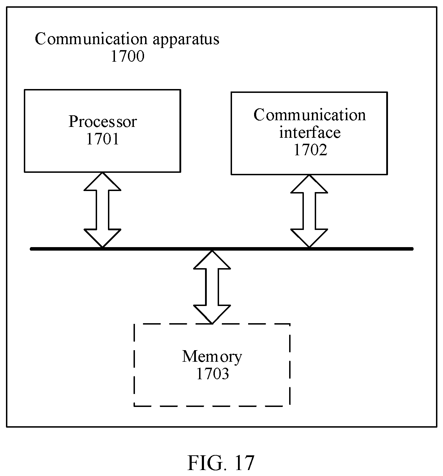

FIG. 17 is a diagram of a structure of a communication apparatus according to an embodiment of this application.

As shown in FIG. 17, the communication apparatus 1700 includes a processor 1701 and a communication interface 1702. The processor 1701 and the communication interface 1702 are coupled to each other. It may be understood that the communication interface 1702 may be a transceiver or an input/output interface. The processor 1701 and the communication interface 1702 may implement any one of the foregoing communication methods, for example, may implement any one of the foregoing communication methods shown in FIG. 7 and FIG. 10 to FIG. 14.

The processor 1701 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor.

Optionally, the communication apparatus 1700 may further include a memory 1703, which is shown in a dashed box in FIG. 17. The memory 1703 is configured to store instructions executed by the processor 1701, store input data required by the processor 1701 to run instructions, or store data generated after the processor 1701 runs instructions.

In a first embodiment, the communication apparatus 1700 may be configured to implement the functions of the terminal device in any one of FIG. 7 and FIG. 10 to FIG. 14. Correspondingly, the communication apparatus 1700 may be configured to implement the steps performed by the terminal device in any one of FIG. 7 and FIG. 10 to FIG. 14.

For example, the communication apparatus 1700 may be configured to implement the functions of the communication apparatus 1500. Optionally, the processor 1701 is configured to implement the functions of the processing module 1502, and the communication interface 1702 is configured to implement the functions of the transceiver module 1501.

In a second embodiment, the communication apparatus 1700 may be configured to implement the functions of the network device in any one of FIG. 7 and FIG. 10 to FIG. 14. Correspondingly, the communication apparatus 1700 may be configured to implement the steps performed by the network device in any one of FIG. 7 and FIG. 10 to FIG. 14.

For example, the communication apparatus 1700 may be configured to implement the functions of the communication apparatus 1600. Optionally, the processor 1701 is configured to implement the functions of the processing module 1602, and the communication interface 1702 is configured to implement the functions of the transceiver module 1601.

An embodiment of this application provides a communication system. The communication system includes a terminal device and a network device. The terminal device may implement the functions of the terminal device in any one of FIG. 7 and FIG. 10 to FIG. 14, and the network device may implement the functions of the network device in any one of FIG. 7 and FIG. 10 to FIG. 14.

For example, the terminal device performs S702 and S703, and the network device performs S701 and S702.

An embodiment of this application provides a chip system. The chip system includes a processor and an interface. The processor is configured to invoke and run instructions from the interface. When executing the instruction, the processor implements any one of the foregoing communication methods, for example, performs the communication method shown in FIG. 7 and FIG. 10 to FIG. 14.

An embodiment of this application provides a computer-readable storage medium. The computer-readable storage medium is configured to store a computer program or instructions. When the computer program or the instructions are run, any one of the foregoing communication methods is implemented, for example, the communication method shown in FIG. 9 is implemented.

An embodiment of this application provides a computer program product including instructions. When the computer program product runs on a computer, any one of the foregoing communication methods is implemented, for example, the communication method shown in any one of FIG. 7 and FIG. 10 to FIG. 14 is performed.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, applied to a terminal device, wherein the terminal device has no serving cell on a first frequency range and supports a per-frequency range measurement gap configuration, and performs a measurement based on the per-frequency range measurement gap configuration or has no measurement gap configuration on the first frequency range; and the method comprises:

   receiving information about N measurement gap-based measurements, wherein N measurement gap-based measurement frequencies are located on the first frequency range, and N is a positive integer; and
   determining carrier-specific scaling factors CSSFs of the N measurement gap-based measurements, wherein the CSSFs of the N measurement gap-based measurements are related to the information about the N measurement gap-based measurements.

2. The method according to claim 1, wherein the information about the N measurement gap-based measurements indicates at least one of the following:

   R time domain locations, wherein R is an integer greater than or equal to 1;
   a quantity of measurement frequencies;
   a first quantity, wherein the first quantity is a total quantity of the N measurement gap-based measurements and first measurements, and the first measurement is a measurement other than the N measurement gap-based measurements;
   time domain locations of any two of the N measurement gap-based measurements do not overlap, wherein N is an integer greater than 1; or
   measurement-related information configured for one measurement gap-based measurement, wherein N is 1.

3. The method according to claim 2, wherein the information about the N measurement gap-based measurements indicates the R time domain locations; and
   a CSSF of the one measurement gap-based measurement is a second quantity, the second quantity is a maximum quantity of time domain locations that overlap a time domain location of the one measurement gap-based measurement in the R time domain locations, and the one measurement gap-based measurement is one of the N measurement gap-based measurements.

4. The method according to claim 2, wherein the information about the N measurement gap-based measurements indicates the R time domain locations;

   a CSSF of the one measurement gap-based measurement is a second quantity, the second quantity is a maximum quantity of time domain locations that overlap a time domain location of the one measurement gap-based measurement in the R time domain locations, the one measurement gap-based measurement is one of M measurement gap-based measurements, the M measurement gap-based measurements belong to the N measurement gap-based measurements, and M is an integer greater than or equal to 1; and
   CSSFs of P measurement gap-based measurements are a first value, the P measurement gap-based measurements are measurements other than the M measurement gap-based measurements in the N measurement gap-based measurements, and P is an integer greater than or equal to 0.

5. The method according to claim 3 or 4, wherein the second quantity corresponds to first duration.

6. The method according to claim 2, wherein the CSSFs of the N measurement gap-based measurements are the quantity of measurement frequencies.

7. The method according to claim 2, wherein the CSSFs of the N measurement gap-based measurements are related to the first quantity.

8. The method according to claim 2 or 7, wherein the first measurement comprises at least one of the following:

a measurement gap-less synchronization signal SSB intra-frequency measurement on a second frequency range;

a measurement gap-less SSB inter-frequency measurement on a second frequency range;

a channel state information reference signal CSI-RS-based intra-frequency measurement on a second frequency range; or

an intra-frequency received signal strength indication RSSI or channel occupancy CO measurement on a second frequency range.

9. The method according to claim 2 or 7, wherein the first measurement comprises at least one of the following:

a measurement gap-less SSB measurement configured in a secondary cell on a second frequency range; or

a measurement gap-less SSB inter-frequency measurement on a second frequency range.

10. The method according to claim 2, wherein the information about the N measurement gap-based measurements indicates that the time domain locations of the any two of the N measurement gap-based measurements do not overlap, and the CSSFs of the N measurement gap-based measurements are a second value.

11. The method according to claim 2, wherein the information about the N measurement gap-based measurements indicates the measurement-related information configured for the one measurement gap-based measurement, wherein N is 1, and the CSSFs of the N measurement gap-based measurements are a third value.

12. A communication method, applied to a network device, wherein the method comprises:

determining information about N measurement gap-based measurements, wherein N measurement gap-based measurement frequencies are located on a first frequency range, and N is a positive integer; and

sending the information about the N measurement gap-based measurements to a terminal device, wherein the terminal device has no serving cell on the first frequency range and supports a per-frequency range measurement gap configuration, and the network device provides a per-frequency range measurement gap configuration for the terminal device or does not provide the terminal device with a measurement gap configuration on the first frequency range, wherein the information about the N measurement gap-based measurements is used to determine CSSFs of the N measurement gap-based measurements.

13. The method according to claim 12, wherein the information about the N measurement gap-based measurements indicates at least one of the following:

R time domain locations, wherein R is an integer greater than or equal to 1;

a quantity of measurement frequencies;

a first quantity, wherein the first quantity is a total quantity of the N measurement gap-based measurements and first measurements, and the first measurement is a measurement other than the N measurement gap-based measurements;

time domain locations of any two of the N measurement gap-based measurements do not overlap, wherein N is an integer greater than 1; or

measurement-related information of one measurement gap-based measurement, wherein N is 1.

14. The method according to claim 13, wherein the information about the N measurement gap-based measurements indicates the R time domain locations; and

a CSSF of the one measurement gap-based measurement is a second quantity, the second quantity is a maximum quantity of time domain locations that overlap a time domain location of the one measurement gap-based measurement in the R time domain locations, and the one measurement gap-based measurement is one of the N measurement gap-based measurements.

15. The method according to claim 13, wherein the information about the N measurement gap-based measurements indicates the R time domain locations;

a CSSF of the one measurement gap-based measurement is a second quantity, the second quantity is a maximum quantity of time domain locations that overlap a time domain location of the one measurement gap-based measurement in the R time domain locations, the one measurement gap-based measurement is one of M measurement gap-based measurements, the M measurement gap-based measurements belong to the N measurement gap-based measurements, and M is an integer greater than or equal to 1; and
CSSFs of P measurement gap-based measurements are a first value, the P measurement gap-based measurements are measurements other than the M measurement gap-based measurements in the N measurement gap-based measurements, and P is an integer greater than or equal to 0.

16. The method according to claim 14 or 15, wherein the second quantity corresponds to first duration.

17. The method according to claim 13, wherein the CSSFs of the N measurement gap-based measurements are the quantity of measurement frequencies.

18. The method according to claim 13, wherein the CSSFs of the N measurement gap-based measurements are related to the first quantity.

19. The method according to claim 13 or 18, wherein the first measurement comprises at least one of the following:

a measurement gap-less SSB intra-frequency measurement on a second frequency range;
a measurement gap-less SSB inter-frequency measurement on a second frequency range;
a CSI-RS-based intra-frequency measurement on a second frequency range; or
an intra-frequency RSSI or CO measurement on a second frequency range.

20. The method according to claim 13 or 18, wherein the first measurement comprises at least one of the following:

a measurement gap-less SSB measurement configured in a secondary cell on a second frequency range; or
a measurement gap-less SSB inter-frequency measurement on a second frequency range;

21. The method according to claim 13, wherein the information about the N measurement gap-based measurements indicates that the time domain locations of the any two of the N measurement gap-based measurements do not overlap, and the CSSFs of the N measurement gap-based measurements are a second value.

22. The method according to claim 13, wherein the information about the N measurement gap-based measurements indicates the measurement-related information of the one measurement gap-based measurement, wherein N is 1, and the CSSFs of the N measurement gap-based measurements are a third value.

23. A communication apparatus, comprising a module configured to perform the method according to any one of claims 1 to 22.

24. A communication apparatus, comprising a processor and a communication interface, wherein the communication interface is configured to receive a signal from a communication apparatus other than the communication apparatus and transmit the signal to the processor, or send a signal from the processor to a communication apparatus other than the communication apparatus, and the processor is configured to implement the method according to any one of claims 1 to 22 by using a logic circuit or by executing code instructions.

25. A computer-readable storage medium, wherein the computer-readable storage medium stores a computer program, and when the computer program is run, the method according to any one of claims 1 to 22 is implemented.

26. A computer program product, wherein the computer program product comprises computer program code, and when the computer program code is run, the method according to any one of claims 1 to 22 is implemented.

PSCC (EN-DC) or PCC (NR-SA/NR-DC/NE-DC)

Searcher 1 (searcher 1)

FIG. 1

Intra-frequency neighbor-cell measurement on an SCC

Other measurements on the SCC: measurement gap-less intra-frequency measurement, measurement gap-less inter-frequency measurement, CSI-RS-based intra-frequency measurement, and RSSI/CO measurement

PSCC (NR-DC)

Searcher 2 (searcher 2)

FIG. 2

FIG. 3

FIG. 4

Access network
device

Core network

Terminal
device

FIG. 5

Core network

First access network device

Second access network device

PCell

SCell

SCell

PSCell

SCell

SCell

Terminal device

FIG. 6

```
┌─────────────────────┐                    ┌─────────────────────┐
│   Terminal device   │                    │   Network device    │
└─────────────────────┘                    └─────────────────────┘
          │                                           │
          │                   ┌───────────────────────┴─────────────────────┐
          │                   │ S701: Determine information about N          │
          │                   │ measurement gap-based measurements           │
          │                   └───────────────────────┬─────────────────────┘
          │         S702: Information about the N      │
          │         measurement gap-based measurements │
          │ ◄─────────────────────────────────────────│
┌─────────┴───────────────────────────────┐           │
│ S703: Determine CSSFs of the N           │           │
│ measurement gap-based measurements       │           │
└─────────┬───────────────────────────────┘           │
          │                                           │
```

FIG. 7

FIG. 8

Frequency

Measurement 0

Measurement 1

Measurement 2

Measurement 3

Measurement 4

Measurement 5

Time

0   1   2   3   4   5   6   7   8

FIG. 9

Terminal device

Network device

S1001: Determine information about N measurement gap-based measurements (indicating R time domain locations)

S1002: Information about the N measurement gap-based measurements

S1003: Determine that a CSSF of one of the N measurement gap-based measurements is a second quantity

FIG. 10

Terminal device | Network device

S1101: Determine information about N measurement gap-based measurements (indicating a quantity of measurement frequencies)

S1102: Information about the N measurement gap-based measurements

S1103: Determine that CSSFs of the N measurement gap-based measurements are the quantity of measurement frequencies

FIG. 11

Terminal device | Network device

S1201: Determine information about N measurement gap-based measurements (indicating a first quantity)

S1202: Information about the N measurement gap-based measurements

S1203: Determine that CSSFs of the N measurement gap-based measurements are related to the first quantity

FIG. 12

Terminal device — Network device

S1301: Determine information about N measurement gap-based measurements (indicating that time domain locations of any two of the N measurement gap-based measurements do not overlap)

S1302: Information about the N measurement gap-based measurements

S1303: Determine that CSSFs of the N measurement gap-based measurements are a second value

FIG. 13

Terminal device — Network device

S1401: Determine information about one measurement gap-based measurement (indicating measurement-related information of the one measurement gap-based measurement)

S1402: Information about N measurement gap-based measurements

S1403: Determine that a CSSF of the one measurement gap-based measurement is a third value

FIG. 14

Communication
apparatus
1500

Transceiver
module
1501

Processing
module
1502

FIG. 15

Communication
apparatus
1600

Transceiver
module
1601

Processing
module
1602

FIG. 16

Communication apparatus
1700

Processor
1701

Communication
interface
1702

Memory
1703

FIG. 17

## INTERNATIONAL SEARCH REPORT

| International application No. |
| --- |
| **PCT/CN2023/125054** |

### A.  CLASSIFICATION OF SUBJECT MATTER

H04W24/08(2009.01)i

According to International Patent Classification (IPC) or to both national classification and IPC

### B.  FIELDS SEARCHED

Minimum documentation searched (classification system followed by classification symbols)

IPC:H04W24/-

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN, WPABS, WPABSC, CNKI: 测量间隙, 测量间隔, 没有, 不包, 不存在, 不含, 基于, 第一频段, 服务, 小区, 缩放因子, 加权因子, 载波特定加权因子, 支持, 频点, 频段, 频率, 频带, MG, measurement, gap, based, bwp, cell, CSSF, scaling, factor, FR, no, particular, per, PRS, RSTD, serving, support, capable

### C.  DOCUMENTS CONSIDERED TO BE RELEVANT

| Category* | Citation of document, with indication, where appropriate, of the relevant passages | Relevant to claim No. |
| --- | --- | --- |
| A | CN 111148146 A (HUAWEI TECHNOLOGIES CO., LTD.) 12 May 2020 (2020-05-12) entire document | 1-26 |
| A | CN 113518369 A (HUAWEI TECHNOLOGIES CO., LTD.) 19 October 2021 (2021-10-19) entire document | 1-26 |
| A | US 2019274146 A1 (INTEL CORPARTION) 05 September 2019 (2019-09-05) entire document | 1-26 |
| A | WO 2022082746 A1 (APPLE INC.) 28 April 2022 (2022-04-28) entire document | 1-26 |
| A | APPLE. ""R4-1913498 CR on UE measurements capability and reporting criteria for NR-U"" *3GPP tsg_ran\wg4_radio*, 09 November 2019 (2019-11-09), entire document | 1-26 |

☐ Further documents are listed in the continuation of Box C.          ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **18 January 2024** | **20 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 111148146 | A | 12 May 2020 | WO | 2020088597 | A1 | 07 May 2020 |
| | | | | CN | 111148146 | B | 19 November 2021 |
| CN | 113518369 | A | 19 October 2021 | WO | 2021204239 | A1 | 14 October 2021 |
| | | | | EP | 4124097 | A1 | 25 January 2023 |
| | | | | IN | 202237058332 | A | 27 January 2023 |
| | | | | US | 2023030224 | A1 | 02 February 2023 |
| US | 2019274146 | A1 | 05 September 2019 | US | 11665684 | B2 | 30 May 2023 |
| | | | | US | 2023276423 | A1 | 31 August 2023 |
| WO | 2022082746 | A1 | 28 April 2022 | US | 2023269616 | A1 | 24 August 2023 |
| | | | | EP | 4233345 | A1 | 30 August 2023 |

Form PCT/ISA/210 (patent family annex) (July 2022)

**REFERENCES CITED IN THE DESCRIPTION**

**Patent documents cited in the description**

• CN 202211369072